(19) Europäisches Patentamt
European Patent Office
Office européen des brevets

(11) **EP 4 597 047 A1**

(12) **EUROPÄISCHE PATENTANMELDUNG**

(43) Veröffentlichungstag:
06.08.2025  Patentblatt 2025/32

(21) Anmeldenummer: 25152178.7

(22) Anmeldetag: **16.01.2025**

(51) Internationale Patentklassifikation (IPC):
**G01F 1/667** (2022.01)

(52) Gemeinsame Patentklassifikation (CPC):
**G01F 1/667**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  **01.02.2024  EP 24155240**

(71) Anmelder: **Levitronix GmbH**
**8048 Zürich (CH)**

(72) Erfinder: **Bober, Maciej**
**86929 Penzing (DE)**

(74) Vertreter: **IPS Irsch AG**
**Langfeldstrasse 88**
**8500 Frauenfeld (CH)**

(54) **ULTRASCHALL-MESSVORRICHTUNG ZUR ERMITTLUNG DES DURCHFLUSSES SOWIE VERFAHREN ZUR BESTIMMUNG DER TEMPERATUR**

(57)    Es wird eine Ultraschall-Messvorrichtung vorgeschlagen zur Ermittlung des Durchflusses eines in einer Leitung strömenden Fluids, mit einer Messröhre (2), welche eine Mittelachse (M) aufweist, die eine Strömungsrichtung (A) für das Fluid festlegt, mit mindestens zwei Ultraschallwandlern (11,22), die derart angeordnet und ausgerichtet sind, dass sie Messsignale (12, 21) miteinander austauschen können, mit einer Kontrolleinheit (20) zum Ansteuern der Ultraschallwandler (11, 22) und zum Auswerten der Messsignale (12, 21) und mit einem ersten Temperatursensor (61) zum Bestimmen einer ersten Temperatur (T1), der für das Fluid unkontaktierbar angeordnet ist. Es ist ein zweiter Temperatursensor (62) zum Bestimmen einer zweiten Temperatur (T2) vorgesehen, der für das Fluid unkontaktierbar angeordnet ist. Ferner wird ein Verfahren zur Bestimmung der Temperatur eines Fluids in einer solchen Ultraschall-Messvorrichtung vorgeschlagen.

Fig.1

**Beschreibung**

Die Erfindung betrifft eine Ultraschall-Messvorrichtung zur Ermittlung des Durchflusses eines in einer Leitung strömenden Fluids gemäss dem Oberbegriff des unabhängigen Anspruchs. Die Erfindung betrifft ferner ein Verfahren zur Bestimmung der Temperatur eines Fluids in einer solchen Ultraschall-Messvorrichtung.

In der Verfahrenstechnik werden für die Untersuchung von Fluiden oder für die Messung an Fluiden, die in Leitungen, beispielsweise einem flexiblen Kunststoffschlauch, strömen, nicht-invasive Methoden eingesetzt. Dies ist insbesondere bei solchen hochreinen oder sehr empfindlichen Fluiden der Fall, bei denen ein Kontakt zwischen dem Fluid und der Messvorrichtung so weit wie möglich vermieden werden soll, beispielsweise, damit das Fluid nicht kontaminiert wird. Als Beispiele seien hier die Pharmaindustrie, die Halbleiterindustrie und die biotechnologische Industrie genannt. Hier werden häufig Lösungen und Suspensionen hergestellt und gefördert, die eine sehr hohe Anforderung an die Reinheit und/oder an die Unversehrtheit des Fluids stellen. Häufig müssen derartige Fluide sogar unter sterilen Bedingungen behandelt werden. Nicht-invasive Methoden werden auch eingesetzt, wenn die chemische Beständigkeit der Messvorrichtung nicht gewährleistet ist.

Als nicht-invasive Methode zur Messung an Fluiden, die in Leitungen strömen, hat sich insbesondere die Ultraschall-Messtechnik bewährt. Ultraschall-Messvorrichtungen zur Messung an einem in einer Leitung strömenden Fluid werden insbesondere eingesetzt, um den Durchfluss des Fluids durch eine Leitung zu bestimmen. Die Ultraschall-Messvorrichtung umfasst typischerweise mehrere Ultraschallwandlern, welche das Fluid mit UltraschallSignalen beaufschlagen und Ultraschall-Signale empfangen können.

Es sind Inline Ultraschall-Messvorrichtungen bekannt, womit Messsysteme bezeichnet werden, bei denen Teile der Ultraschall-Messvorrichtung, beispielsweise eine separate Messröhre, in die von dem Fluid durchströmte Leitung eingebracht werden, z.B. derart, dass eine separate Messröhre vorgesehen ist, deren Enden mit der Leitung verbunden werden, sodass das Fluid aus der Leitung in die Messröhre strömt, die Messröhre durchströmt, und an deren anderen Ende wieder in die Leitung strömt. Die Ultraschallmessung erfolgt dann im Bereich der Messröhre. Dabei sind auch Anordnungen bekannt, bei denen sich die Messstrecke, d.h. die Strecke, entlang welcher die Ultraschallwandler Signale miteinander austauschen, parallel zur Strömungsrichtung des Fluids in der Messröhre erstreckt. Bei einer solchen Anordnung werden typischerweise Messsignale ausgesendet und erfasst, die sich in Strömungsrichtung des Fluids ausbreiten, und Messsignale, die sich entgegengesetzt zur Strömungsrichtung ausbreiten. Aus der Laufzeitdifferenz solcher Messsignale lässt sich dann der Durchfluss des Fluids ermitteln. Eine derartige Ultraschall-Messvorrichtung mit einer Messröhre, deren Enden mit der Leitung verbunden werden, ist beispielsweise in der EP 3 770 561 A1 beschrieben.

Ferner sind Ultraschall-Messvorrichtungen bekannt, die als Klemmvorrichtung ausgestaltet ist. Solche Vorrichtungen werden auch als "Clamp-on" Vorrichtungen bezeichnet. Eine solche Klemmvorrichtung ist derart ausgestaltet, dass sie auf eine flexible Leitung aufgeklemmt werden kann, sodass die Messröhre der Ultraschall-Messvorrichtung die Leitung umschliesst, derart, dass die Leitung in der Messröhre der Ultraschall-Messvorrichtung eingeklemmt wird. Die Leitung mit dem darin strömenden Fluid wird dann mit Ultraschallsignalen beaufschlagt. Nach Durchlaufen der Leitung und des Fluids werden die Ultraschallsignale von einem Ultraschallwandler empfangen und das empfangene Signal ausgewertet.

Für die Bestimmung des Durchflusses ist es eine bekannte Massnahme, dass die Ultraschall-Messvorrichtung mindestens zwei Ultraschallwandler umfasst, welche im Betriebszustand lateral an gegenüberliegenden Seiten der Leitung angeordnet sind. Die beiden Ultraschallwandler sind bezüglich der Strömungsrichtung des Fluids zueinander versetzt angeordnet und dabei so ausgerichtet, dass der erste Ultraschallwandler ein von dem zweiten Ultraschallwandler gesendetes Signal empfangen kann, und der zweite Ultraschallwandler ein von dem ersten Ultraschallwandler gesendetes Signal empfangen kann. Durch den Versatz zueinander sind dabei die beiden Ultraschallwandler so ausgerichtet, dass sie ihre Ultraschallsignale jeweils schräg zur Strömungsrichtung des Fluids aussenden, wobei der eine Ultraschallwandler das Signal schräg mit der Strömungsrichtung aussendet, während der andere Ultraschallwandler das Signal schräg gegen die Strömungsrichtung aussendet. Nun wird mit dem ersten Ultraschallwandler ein Messsignal ausgesendet, das von dem zweiten Ultraschallwandler empfangen wird, und dann wird von dem zweiten Ultraschallwandler ein Messsignal ausgesendet, das von dem ersten Ultraschallwandler ausgesendet wird.

Das schräg in Strömungsrichtung ausgesendete Messsignal wird in der Strömung beschleunigt und das schräg gegen die Strömungsrichtung ausgesendete Messignal wird durch die Strömung abgebremst. Die Laufzeitdifferenz der beiden Messsignale ist proportional zur Strömungsgeschwindigkeit des Fluids, sodass sich aus dieser Laufzeitdifferenz der Durchfluss durch die flexible Leitung ermitteln lässt.

Ultraschall-Messvorrichtungen, die als Klemmvorrichtung ausgestaltet sind, bei denen, die von dem Fluid durchströmte Leitung in der Messröhre der Ultraschall-Messvorrichtung eingeklemmt wird, sind beispielsweise in der EP 3 489 634 A1 oder auch in der EP 3 816 590 A1 offenbart.

Auch in Ultraschall-Messvorrichtungen, die als Klemmvorrichtung ausgestaltet sind, sind Ausgestaltungen möglich, bei denen die Leitung nicht in der Messröhre eingeklemmt wird, sondern mit den beiden Enden der Messröhre verbunden wird. Diese Verbindung kann beispielsweise jeweils mittels einer Stecknippelverbindung ("barbed fitting") erfolgen. Das Fluid strömt dann aus der Leitung in die Messröhre, durchströmt die Messröhre und strömt an deren anderen Ende wieder in die Leitung.

Je nach Anwendungsfall kann die Ausgestaltung, bei welcher die Leitung mit den beiden Enden der Messröhre verbunden wird, vorteilhaft sein. Insbesondere für Messungen an sehr empfindlichen oder sehr aggressiven Substanzen stellt die Reinigung bzw. das Sterilisieren der Ultraschall-Messvorrichtung einen sehr grossen Zeit-, Material- und Kostenaufwand dar. Daher besteht häufig das Bedürfnis, die mit den Substanzen in Kontakt kommenden Komponenten, also beispielsweise die Messröhre, als Einmal (single-use) -teile für den Einmalgebrauch auszugestalten. Bei der Ausgestaltung für den Einmalgebrauch werden vorzugsweise diejenigen Komponenten, welche mit den zu behandelnden Fluiden in Kontakt kommen, nur genau einmal verwendet und dann bei der nächsten Anwendung durch neue, das heisst ungebrauchte, Einmalteile ersetzt. Bei der Herstellung bzw. der Konzipierung von Einmalteilen ist es ein wichtiges Kriterium, dass diese in möglichst einfacher Weise mit den anderen Komponenten der Messvorrichtung zusammengesetzt werden können. Es ist wünschenswert, dass dieses Zusammensetzen und natürlich auch das Trennen mit möglichst geringem Aufwand, mit wenigen Handgriffen, rasch und vorzugsweise ohne Werkzeug erfolgen kann.

Unabhängig von der konkreten Ausgestaltung der Ultraschall-Messvorrichtung ist es für sehr viele Anwendungen erforderlich, dass bei der Durchflussmessung bzw. bei der Bestimmung anderer Parameter die Temperatur des Fluids in der Messröhre bekannt ist. Die Temperatur beeinflusst viele Grössen, wie beispielsweise die Dichte, die Schallgeschwindigkeit, die Schallbrechung, die Schallweg-Längen, die Viskosität, die Reibung, elastische Module oder den elektrischen Widerstand. Daher ist es oft wichtig, die Temperatur des Fluids in der Messröhre zu kennen. Die Temperatur des Fluids in der Messröhre kann dann insbesondere auch dazu verwendet werden, die messtechnisch ermittelten Durchflusswerte zu korrigieren oder andere temperaturabhängige Effekte zu kompensieren. Ferner ist es vorteilhaft, wenn die Temperatur des Fluids in der Messröhre als Prozessparameter zur Verfügung gestellt werden kann.

Aus den schon genannten Gründen ist es dabei wünschenswert, dass auch die Temperaturmessung nicht-invasiv erfolgt. Das heisst, ein direkter körperlicher Kontakt des Temperatursensors mit dem Fluid soll vermieden werden.

Für eine nicht-invasive Temperaturmessung an dem Fluid wird beispielsweise in der EP 3 770 531 A1 vorgeschlagen, dass man einen Temperatursensor aussen an der Wandung der Messröhre vorsieht. Der durch die Wandung verursachte Unterschied zwischen der realen Temperatur des Fluids in der Messröhre und der vom Temperatursensor ermittelten Temperatur soll beispielsweise durch Eichmessungen bestimmt werden, sodass anschliessend aus der vom Temperatursensor ermittelten Temperatur die Temperatur des Fluids in der Messröhre bestimmt werden kann. Es wird ferner die Möglichkeit offenbart, an der Aussenseite der Wandung der Messröhre eine Ausnehmung vorzusehen, sodass die Wandung dort eine kleinere Dicke aufweist. Der Temperatursensor kann dann in dieser Ausnehmung angeordnet werden und aufgrund der dort dünneren Wandung eine Temperatur messen, die näher an der Temperatur des in der Messröhre strömenden Fluids liegt.

Bei solchen Ausführungsformen, bei denen die Leitung in der Messröhre eingeklemmt wird, gestaltet sich eine genaue Temperaturbestimmung noch schwieriger, weil zusätzlich der Einfluss der Wandung der Leitung auf die Temperaturmessung berücksichtigt werden muss.

Auch wenn sich diese Ultraschall-Messvorrichtung in der Praxis bewährt hat, so ist es bei vielen Anwendungen wünschenswert, die Temperatur des in der Messröhre strömenden Fluids mit höherer Genauigkeit zu bestimmen.

Ausgehend von diesem Stand der Technik ist es daher eine Aufgabe der Erfindung, eine Ultraschall-Messvorrichtung zur Ermittlung des Durchflusses eines in einer Leitung strömenden Fluids vorzuschlagen, mit welcher die Temperatur des Fluids mit möglichst hoher Genauigkeit und nicht-invasiv bestimmbar ist. Ferner ist es eine Aufgabe der Erfindung, ein Verfahren vorzuschlagen, mit welchem sich die Temperatur des Fluids in einer solchen Ultraschall-Messvorrichtung möglichst genau ermitteln lässt.

Die diese Aufgabe lösenden Gegenstände der Erfindung sind durch die Merkmale des unabhängigen Patentanspruchs der jeweiligen Kategorie gekennzeichnet.

Erfindungsgemäss wird also eine Ultraschall-Messvorrichtung vorgeschlagen zur Ermittlung des Durchflusses eines in einer Leitung strömenden Fluids, mit einer Messröhre, welche eine Mittelachse aufweist, die eine Strömungsrichtung für das Fluid festlegt, mit mindestens zwei Ultraschallwandlern, die derart angeordnet und ausgerichtet sind, dass sie Messsignale miteinander austauschen können, mit einer Kontrolleinheit zum Ansteuern der Ultraschallwandler und zum Auswerten der Messsignale, und mit einem ersten Temperatursensor zum Bestimmen einer ersten Temperatur, der für das Fluid unkontaktierbar angeordnet ist. Es ist ein zweiter Temperatursensor zum Bestimmen einer zweiten Temperatur vorgesehen, der für das Fluid unkontaktierbar angeordnet ist.

Dadurch, dass die beiden Temperatursensoren unkontaktierbar für das Fluid, also beispielsweise neben der Messröhre angeordnet sind, ist gewährleistet, dass die beiden Temperatursensoren nicht mit dem Fluid, welches im Betriebszustand die Messstrecke durchströmt, in Berührung kommen. Hierdurch wird eine nicht-invasive Temperaturmessung ermöglicht.

Wenn in der von dem Fluid durchströmten Ultraschall-Messvorrichtung die Temperatur an zwei festgelegten Messstellen bekannt ist, so lässt sich aus diesen beiden Temperaturwerten die Temperatur des Fluids in der Messröhre mit hoher Genauigkeit bestimmen.

Hierzu wird erfindungsgemäss ein Verfahren zur Bestimmung der Temperatur eines Fluids in einer erfindungsgemässen Ultraschall-Messvorrichtung, vorgeschlagen, wobei mit dem ersten Temperatursensor die erste Temperatur bestimmt wird, und mit dem zweiten Temperatursensor die zweite Temperatur. In der Kontrolleinrichtung ist ein Zusammenhang gespeichert ist, welcher Eingangsgrössen und eine Ausgangsgrösse hat, wobei die Eingangsgrössen die erste Temperatur und die zweite Temperatur umfassen, und wobei die Ausgangsgrösse die Temperatur des Fluids in der Messröhre ist.

Dieser Zusammenhang, der in der Kontrolleinheit gespeichert ist, wird experimentell anhand von mehreren Messungen ermittelt, bei denen für verschiedenen bekannte Umgebungstemperaturen und für verschiedene bekannte Temperaturen des Fluids in der Messröhre jeweils die erste Temperatur und die zweite Temperatur gemessen wird. Aus solchen Messungen lässt sich dann der Zusammenhang erstellen, welcher als Eingangsgrössen die erste und die zweite Temperatur hat, und als Ausgangsgrösse die Temperatur des Fluids in der Messröhre.

Es versteht sich, dass der Zusammenhang auch mehr als zwei Eingangsgrössen haben kann. Beispielsweise können noch weitere Temperaturwerte als Eingangsgrössen verwendet werden, die z. B. von einem dritten, einem vierten, usw. Temperatursensor bestimmt werden. Dabei ist es eine bevorzugte Massnahme, dass die Temperatursensoren an Stellen angeordnet sind, an denen sie primär durch unterschiedliche Wärmequellen oder -senken beeinflusst werden. Dies ist beispielsweise möglich, indem die verschiedenen Temperatursensoren mit unterschiedlichen senkrechten Abständen von der Mittelachse der Messröhre angeordnet werden, sodass die Temperatursensoren im Betriebszustand unterschiedlich weit von dem in der Messröhre strömenden Fluid entfernt sind.

Auch ist es möglich noch andere Betriebsparameter in dem Zusammenhang zu berücksichtigen, beispielsweise die elektrische Leistung der Kontrolleinheit, den Durchfluss des Fluids durch die Ultraschall--Messvorrichtung oder die Leistung oder die Drehzahl einer Pumpe, mit welcher das Fluid durch die Messröhre gefördert wird.

Der Zusammenhang zwischen der ersten und der zweiten Temperatur und der Temperatur des Fluids berücksichtigt vorzugsweise sowohl die individuellen Systemeigenschaften, also insbesondere die Eigenschaften der Ultraschall-Messvorrichtung und der Leitung, als auch die Umgebungsbedingungen, beispielsweise die Umgebungstemperatur, womit die Temperatur der Umgebung gemeint ist, in welcher die Ultraschall-Messvorrichtung angeordnet ist.

In dem Zusammenhang können alle Wärmeübergänge bzw. Wärmetransporte berücksichtigt werden, die in dem System aus Ultraschall-Messvorrichtung, Leitung, Umgebung und Fluid auftreten. Beispielsweise kann die Umgebung dem System Wärme zuführen oder entziehen. Das Fluid kann dem System Wärme zuführen oder Entziehen. Die dabei übertragene Wärmemenge hängt von der Temperatur des Fluids und von seiner Flussrate ab. Elektrische Komponenten, wie beispielsweise Elektronikprints, die in der Kontrolleinheit vorgesehen sein können, verbrauchen Strom, der teilweise als Verlustenergie in Form von Wärme an das System abgegeben wird.

Besonders bevorzugt ist der erste Temperatursensor so angeordnet, dass die erste Temperatur in überwiegendem Masse, beispielsweise zu mehr als fünfzig Prozent, von der Temperatur des Fluids in der Messröhre bestimmt ist, wobei der zweite Temperatursensor an einer Stelle angeordnet wird, wo die Temperatur in weniger starkem Masse von der Temperatur des Fluids abhängig ist, sondern hauptsächlich von einer anderen Wärmequelle oder-senke des Gesamtsystems.

Vorzugsweise ist der zweite Temperatursensor zur Ermittlung der zweiten Temperatur so angeordnet, dass die zweite Temperatur repräsentativ für eine Umgebungstemperatur oder für eine Temperatur der Kontrolleinheit ist. Die Umgebungstemperatur bezeichnet die Temperatur der Umgebung, in welcher die Ultraschall-Messvorrichtung angeordnet ist. Da die Umgebungstemperatur oder die Kontrolleinheit Wärmequellen oder Wärmesenken darstellen können, ist es vorteilhaft die zweite Temperatur an einem solchen Ort zu bestimmen, an dem die zweite Temperatur repräsentativ für die Umgebungstemperatur und/oder die Temperatur der Kontrolleinheit ist.

Vorzugsweise hat der erste Temperatursensor einen senkrechten ersten Abstand von der Mittelachse, und der zweite Temperatursensor hat einen senkrechten zweiten Abstand von der Mittelachse, wobei der zweite Abstand grösser ist als der erste Abstand, oder gleich gross wie der erste Abstand. Speziell bevorzugt ist der zweite Abstand echt grösser als der erste Abstand, sodass der zweite Temperatursensor weiter von dem Fluid entfernt ist als der erste Temperatursensor. Folglich wird der zweite Temperatursensor weniger von der Temperatur des Fluids beeinflusst als der erste Temperatursensor.

Falls der erste Abstand gleich gross oder etwa gleich gross wie der zweite Abstand ist, so wird der zweite Temperatursensor deutlich näher an einer anderen Wärmequelle oder -senke angeordnet als der erste Temperatursensor, beispielsweise näher an der Kontrolleinheit oder näher an der Umgebung. So ist gewährleistet, dass der zweite Sensor deutlich stärker von dieser anderen Wärmequelle oder -senke beeinflusst wird und somit der Einfluss der Temperatur des Fluids auf den zweiten Temperatursensor geringer ist als der Einfluss auf den ersten Temperatursensor, auch wenn beide Temperatursensoren von dem Fluid den gleichen senkrechten Abstand haben.

Der erste Temperatursensor ist vorzugsweise an der Messröhre angeordnet. Dadurch wird die erste Temperatur an einer Stelle gemessen, die nahe an dem Fluid ist.

In einer bevorzugten Ausgestaltung umfasst die Kontrolleinheit einen Elektronikprint, und der zweite Temperatursensor ist an dem Elektronikprint angeordnet. Hierdurch wird die zweite Temperatur an einer Stelle gemessen, an der typischerweise Wärme erzeugt wird.

Bei einer bevorzugten Ausführungsform wird im Betriebszustand das in der Messröhre strömende Fluid senkrecht zur Strömungsrichtung durch eine Wandung begrenzt, welche eine Wandstärke aufweist, wobei der erste Temperatursensor einen senkrechten Abstand von dem Fluid in der Messröhre hat, der grösser oder gleich der Wandstärke und kleiner oder gleich dem Zwanzigfachen, bevorzugt dem Zehnfachen der Wandstärke ist, oder wobei der erste Temperatursensor über eine Wärmeleitschicht mit der Wandung verbunden ist. Die Wandung, welche das strömende Fluid begrenzt, ist die Wandung der Leitung, falls die Ultraschall-Messvorrichtung so ausgestaltet ist, dass die Leitung in die Messröhre der Ultraschall-Messvorrichtung einlegbar ist. Bei Ausgestaltungen, bei denen die Leitung an die Messröhre angeschlossen, aber nicht in diese eingelegt wird, ist die Wandung, welche das strömende Fluid begrenzt, eine Wandung der Messröhre.

Vorzugsweise umfasst die Ultraschall-Messvorrichtung ein Gehäuse, in welchem die Messröhre und die Kontrolleinheit angeordnet sind, wobei der zweite Temperatursensor am Gehäuse oder an der Kontrolleinheit angeordnet ist.

Bei dieser Ausgestaltung wird das Gehäuse bevorzugt durch eine Gehäusewand gegenüber einer Umgebung begrenzt, wobei die Gehäusewand eine Gehäusewandstärke aufweist, und wobei der zweite Temperatursensor in einer senkrechten Entfernung von der Umgebung angeordnet ist, die grösser oder gleich der Gehäusewandstärke ist, und kleiner oder gleich dem Zwanzigfachen, bevorzugt dem Zehnfachen der Gehäusewandstärke, oder wobei der zweite Temperatursensor über eine Wärmeleitschicht mit der Gehäusewand verbunden ist. Da in der Umgebung ausserhalb des Gehäuses die Umgebungstemperatur herrscht, und bei dieser Anordnung die zweite Temperatur in der Nähe der Gehäusewand gemessen wird, ist die zweite Temperatur repräsentativ für die Temperatur des Gehäuses bzw. die Umgebungstemperatur.

Gemäss einer bevorzugten Ausgestaltung ist die Messröhre zur Aufnahme der Leitung ausgestaltet, derart, dass die Leitung von der Messröhre umschlossen wird.

Besonders bevorzugt ist es dabei, dass die Ultraschall-Messvorrichtung als Klemmvorrichtung für eine Klemmverbindung mit der Leitung ausgestaltet ist, sodass die Leitung in der Messröhre einklemmbar ist. Die Ultraschall-Messvorrichtung kann insbesondere als Clamp-on Vorrichtung ausgestaltet sein.

Gemäss einer anderen bevorzugten Ausgestaltung erstreckt sich die Messröhre von einem ersten Ende in der Strömungsrichtung bis zu einem zweiten Ende, wobei die Messröhre an ihrem ersten Ende einen ersten Anschluss aufweist, welcher zur Verbindung mit der Leitung ausgestaltet ist, und an ihrem zweiten Ende einen zweiten Anschluss, welcher zur Verbindung mit der Leitung ausgestaltet ist. Bei dieser Ausgestaltung wird also die Leitung nicht in die Messröhre eingelegt, sondern mit den beiden Enden der Messröhre verbunden. Eine solche Ausgestaltung ist insbesondere dann vorteilhaft, wenn die Messröhre und gegebenenfalls weitere Komponenten der Ultraschall-Messvorrichtung als single-use Teile für den Einmalgebrauch ausgestaltet sind.

Ist die Messröhre als single-use Teil für den Einmalgebrauch ("Einmalteil") ausgestaltet, so hat dies einige Vorteile. Diese erstrecken sich von der Produktion der Messröhre als Einmalteil bis hin zur Verwendung der Messröhre in der Ultraschall-Messvorrichtung. Die Messröhre wird unter sterilen Bedingungen nach einer genau vorgegebenen Form, Vorlage, oder Muster hergestellt. Die Herstellung kann z.B. mittels Spritzgiessens oder 3D-Druck erfolgen. Ebenso sind andere Methoden zur Herstellung möglich. Ein Vorteil von dieser Herstellungsweise ist, dass jedes produzierte Einmalteil exakt dieselben Dimensionen bzw. Abmessungen und Materialeigenschaften aufweist. Dies ist für den Einsatz des Einmalteils in der Ultraschall-Messvorrichtung vorteilhaft.

Bei jedem Einmalteil sind beim Einsetzen dieses in die Ultraschall-Messvorrichtung dieselben Messvoraussetzungen gegeben, was dazu führt, dass eine zuverlässige und immergleich bleibende Messung z.B. der Temperatur gewährleistet wird. Ein weiterer Vorteil der Einmalteil Messröhre gegenüber einer herkömmlichen Leitung ist, dass aufgrund der immer gleichen Abmessungen der Messröhre als Einmalteil, die Mittelachse der Messröhre immer mit der Mittelachse der Ultraschall-Messvorrichtung übereinstimmt. Dadurch wird insgesamt ein symmetrischer Aufbau der Ultraschall-Messvorrichtung erreicht. Somit ist auch ein immergleiches Umschliessen der Messröhre durch das Gehäuse der Ultraschall-Messvorrichtung gegeben. Dabei kann zum Beispiel der Querschnitt, also die Aufnahme für die Messröhre, der Ultraschall-Messvorrichtung hexagonal ausgestaltet sein. Es sind aber auch andere geometrische Formen des Querschnitts, wie z.B. kreisförmig, oval oder polygonal möglich.

Der hexagonale Querschnitt der Ultraschall-Messvorrichtung sorgt für eine Erhöhung der Genauigkeit und der Auflösung bei der Messung. Durch die hexagonale Ausgestaltung ist es möglich, an der Messröhre bzw. dem in der Messröhre fliesenden Fluid entlang mehrerer Messpfade zu messen. Dadurch wird z.B. eine höhere Gasblasentoleranz im Fluid bei der Messung mit der Ultraschall-Messvorrichtung erreicht.

Das immergleiche Umschliessen der Messröhre durch das Gehäuse der Ultraschall-Messvorrichtung sorgt unter anderem dafür, dass eine optimale und reproduzierbare thermische Wechselwirkung zwischen der Ultraschall-Messvorrichtung und dem Fluid, welches durch die Messröhre fliesst, ermöglicht wird. Bei der Verwendung der Ultraschall-Messvorrichtung an einer herkömmlichen Leitung, wie z.B. einem Schlauch, kann es beim Umschliessen allein schon aufgrund der unterschiedlichen Abmessungen der unterschiedlichen Schläuche zu Problemen kommen. Die optimale thermische Wechselwirkung, sowie die immergleiche Positionierung und die immergleichen Materialeigenschaften der Messröhre als Einmalteil haben den Effekt, dass die Temperaturmessung des Mediums deutlich genauer wird und gleichzeitig die Reaktionszeit der Messung bei Änderung z.B. der Temperatur des Mediums, erhöht wird.

Ein weiterer Vorteil der Messröhre als Einmalteil gegenüber einer herkömmlichen flexiblen Schlauchleitung, welche in der Ultraschall-Messvorrichtung eingeklemmt wird, ist, dass die Messröhre als Einmalteil formstabil ausgestaltet ist. Das heisst, durch Anbringen der Ultraschall-Messvorrichtung kommt es zu einer geringeren Verformung der Messröhre, wohingegen bei einem Schlauch eine Clamp-on-Ultraschall-Messvorrichtung dafür sorgen kann, dass der Schlauch am Ort der Anbringung dieser gequetscht und verengt werden kann, sodass einerseits das Fluid einen höheren Widerstand als üblich erfährt und andererseits eine Messung von z.B. der Temperatur nicht konsistent ist bzw. es vor jeder Messung für eine genaue Bestimmung der Temperatur eine Eichung durchgeführt werden muss.

Es versteht sich von selbst, dass die im Rahmen dieser Anmeldung genannten Vorteile und Eigenschaften für eine Messröhre auch für eine Messröhre, welche als Einmalteil ausgestaltet ist, anwendbar sind.

Bezüglich des erfindungsgemässen Verfahrens ist es bevorzugt, dass der Zusammenhang, welcher als Ausgangsgrösse die Temperatur des Fluids in der Messröhre hat, auf einer Mehrzahl von Isothermen beruht, von denen jede eine lineare Gleichung mit einer Steigung und einem Achsenabschnitt ist, welche für eine konstante Temperatur des Fluids in der Messröhre die erste Temperatur als Funktion der zweiten Temperatur beschreibt.

Dabei ist es bevorzugt, dass die Temperatur des Fluids in der Messröhre mit einer Bestimmungsfunktion ermittelt wird, die genau eine Variable hat, wobei die Variable der Achsenabschnitt der Isotherme ist.

Vorzugsweise ist die Bestimmungsfunktion ein Polynom höchstens zweiten Grades ist. Je nach Anwendungsfall kann es auch ausreichend sein, dass als Bestimmungsfunktion eine Gerade, als ein Polynom ersten Grades verwendet wird.

In einer bevorzugten Ausführungsform werden für die Ultraschall-Messvorrichtung anhand der Isothermen spezifische Offset-Werte für die Eingangsgrössen ermittelt. Mit diesen Offset-Werten können beispielsweise Bauteiltoleranzen ausgeglichen werden. Beispielsweise sind häufig die Temperatursensoren, die z.B. als Thermoelemente oder Infrarot-Sensoren ausgestaltet sind, mit solchen Toleranzen behaftet, das heisst nominell identische Bauteile können in der Praxis geringfügige Abweichungen voneinander aufweisen. Solche Bauteiltoleranzen können bei dem erfindungsgemässen Verfahren optional berücksichtigt bzw. ausgeglichen werden.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:

Fig. 1: eine schematische Darstellung eines ersten Ausführungsbeispiels einer erfindungsgemässen Ultraschall-Messvorrichtung,

Fig. 2: eine perspektivische Darstellung eines zweiten Ausführungsbeispiels einer erfindungsgemässen Ultraschall-Messvorrichtung,

Fig. 3: eine schematische Schnittdarstellung einer Variante des zweiten Ausführungsbeispiels,

Fig. 4: eine schematische Schnittdarstellung einer weiteren Variante des zweiten Ausführungsbeispiels,

Fig. 5: eine schematische Schnittdarstellung eines dritten Ausführungsbeispiels einer erfindungsgemässen Ultraschall-Messvorrichtung,

Fig. 6: drei Varianten für die Ausgestaltung der Wandung, welche das in der Messröhre strömende Fluid senkrecht zur Strömungsrichtung begrenzt, jeweils in einer Schnittdarstellung,

Fig. 7: eine schematische Schnittdarstellung einer Ausgestaltung eines Gehäuses der Ultraschall-Messvorrichtung,

Fig. 8: eine schematische Darstellung einer Messanordnung zum Bestimmen des Zusammenhangs zwischen der ersten und zweiten Temperatur und der Temperatur des Fluids, und

Fig. 9 - 12:    verschiedene Diagramme zur Erläuterung der Bestimmung des Zusammenhangs.

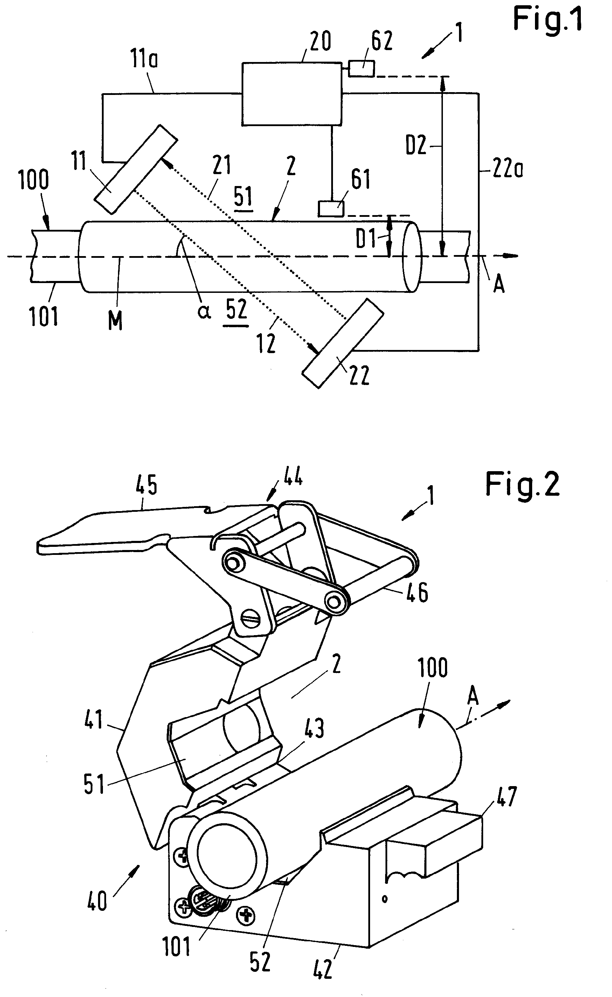

Fig. 1 zeigt in einer schematischen Darstellung ein erstes Ausführungsbeispiel einer erfindungsgemässen Ultraschall-Messvorrichtung, die gesamthaft mit dem Bezugszeichen 1 bezeichnet ist. Die Ultraschall-Messvorrichtung 1 ist zur Ermittlung des Durchflusses eines Fluids durch eine Leitung 100 ausgestaltet. Die Ultraschall-Messvorrichtung 1 umfasst eine Messröhre 2, welche eine Mittelachse M aufweist, die eine Strömungsrichtung A für das Fluid festlegt. Bei dem ersten Ausführungsbeispiel ist die Ultraschall-Messvorrichtung 1 derart ausgestaltet, dass die Messröhre 2 die Leitung 100 aufnehmen kann, das heisst die Leitung 100 ist in die Messröhre 2 einlegbar, vorzugsweise so, dass die Leitung 100 von der Messröhre 2 umschlossen wird.

Im Folgenden wird auf den für die Praxis besonders wichtigen Fall Bezug genommen, dass die Leitung 100 eine flexible Leitung 100 ist, also eine Leitung 100, deren Wandung 101 deformierbar ist. Die flexible Leitung 100 ist beispielsweise ein Kunststoffschlauch, der aus einem Silikonkautschuk oder aus PVC besteht. Natürlich kann die Leitung 100 auch aus anderen Materialien, insbesondere aus einem Kunststoff oder einem Kautschuk bestehen. Selbstverständlich kann die Leitung 100 auch als starre, also nicht flexible Leitung ausgebildet sein. Die Messröhre 2 besteht vorzugsweise aus einem Kunststoff und ist vorzugsweise deutlich härter als die Leitung 100 und insbesondere formstabil ausgestaltet.

Das Fluid durchströmt die Leitung 100 in der Strömungsrichtung A. Für das Aussenden und das Empfangen von Messsignalen 12, 21, welche Ultraschallsignale sind, sind mindestens zwei Ultraschallwandler 11, 22 vorgesehen, nämlich ein erster Ultraschallwandler 11 und ein zweiter Ultraschallwandler 22. Im Betriebszustand ist der erste Ultraschallwandler 11 lateral auf einer ersten Seite 51 der Leitung 100 angeordnet, und der zweite Ultraschallwandler 22 ist lateral auf einer zweiten Seite 52 der Leitung 100 angeordnet, wobei die zweite Seite 52 der ersten Seite 51 gegenüberliegt. Die Ultraschallwandler 11, 22 sind derart angeordnet und ausgerichtet, dass sie Messsignale 12, 21 miteinander austauschen können. Im Speziellen sind die Ultraschallwandler 11, 22 so angeordnet, dass der erste Ultraschallwandler 11 ein erstes Messsignal 12 schräg zu der Strömungsrichtung A des Fluids an den zweiten Ultraschallwandler 22 aussenden kann, und ein von dem zweiten Ultraschallwandler 22 schräg zur Strömungsrichtung A ausgesendetes zweites Messsignal 21 empfangen kann.

Die Messsignale 12, 21 sind in Fig. 1 symbolisch jeweils durch gestrichelte gerade Linien mit einer Pfeilspitze dargestellt. Dies ist so zu verstehen, dass die gestrichelte Linie jeweils die Hauptausbreitungsrichtung des von dem entsprechenden Ultraschallwandlers 11, 22 ausgesendeten Ultraschallsignals angibt und die Pfeilspitze die Richtung, also ob sich das jeweilige Ultraschallsignal auf den jeweiligen Ultraschallwandler 11, 22 zubewegt, also empfangen wird, oder von diesem weg bewegt, also gesendet wird. Die Hauptausbreitungsrichtung steht üblicherweise senkrecht auf der Oberfläche des CMUT (Capacitive micromachiend ultrasonic transducer) oder des piezoelektrischen Elements des entsprechenden Ultraschallwandlers 11 bzw. 22. Die Hauptausbreitungsrichtung schliesst mit der Strömungsrichtung A einen Winkel α ein, der von 0° und von 90° verschieden ist.

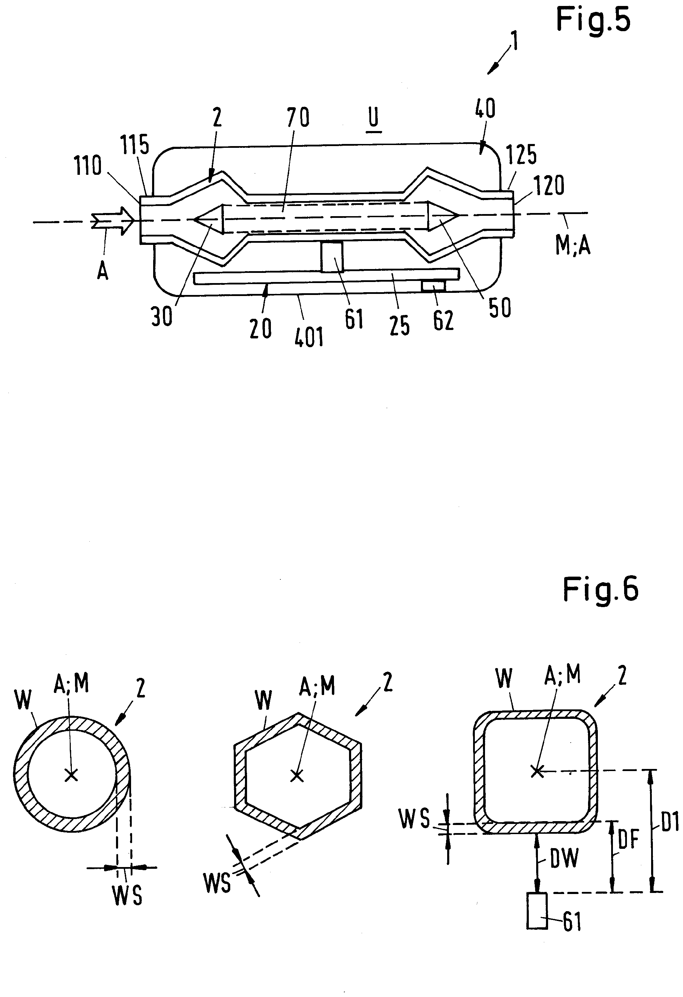

Bei Ultraschall-Messvorrichtungen 1, die als Inline Messvorrichtungen ausgestaltet sind (siehe z.B. Fig. 5), ist es häufig so, dass dieser Winkel α gleich 0° bzw. gleich 180° ist, d.h. die Messsignale werden so ausgesendet, dass ihre Hauptausbreitungsrichtung gleich der Strömungsrichtung A ist bzw. genau entgegengesetzt zur Strömungsrichtung A gerichtet ist. Die lässt sich beispielsweise auch mit U-förmig oder Z-förmig ausgestalteten Ultraschall-Messvorrichtungen realisieren.

Bei der in Fig. 1 dargestellten Ultraschall-Messvorrichtung 1 wird zur Bestimmung des Durchflusses des Fluids durch die Leitung 100 beispielsweise wie folgt vorgegangen. Der erste Ultraschallwandler 11 sendet ein erstes Messsignal 12 aus, wobei das erste Messsignal 12 schräg unter dem Winkel α zur Strömungsrichtung A und in Strömungsrichtung A ausgesendet wird, womit gemeint ist, dass die Hauptausbreitungsrichtung des ersten Messsignals 12 auch eine Komponente in Strömungsrichtung A hat. Der zweite Ultraschallwandler 22 sendet ein zweites Messsignal 21 aus, wobei das zweite Messsignal 21 schräg unter dem Winkel α zur Strömungsrichtung A und gegen die Strömungsrichtung A ausgesendet wird, womit gemeint ist, dass die Hauptausbreitungsrichtung des zweiten Messsignals 21 auch eine Komponente entgegen der Strömungsrichtung A hat.

Das erste Messsignal 12 wird von dem zweiten Ultraschallwandlern 22 nach Durchlaufen des Fluids empfangen und über eine Signalleitung 22a an eine Kontrolleinheit 20 übermittelt. Das zweite Messsignal 21 wird von dem ersten Ultraschallwandlern 11 nach Durchlaufen des Fluids empfangen und über eine Signalleitung 11a an die Kontrolleinheit 20 übermittelt.

In der Kontrolleinheit 20 wird die Laufzeitdifferenz ermittelt zwischen dem ersten Messsignal 12, welches durch das strömende Fluid beschleunigt wurde, und dem zweiten Messsignal 21, welches durch das strömende Fluid verlangsamt wurde. Diese Laufzeitdifferenz zwischen dem ersten Messsignal 12 und dem zweiten Messsignal 21 ist direkt abhängig von der Strömungsgeschwindigkeit des Fluids in der Leitung 100. Somit kann aus der Laufzeitdifferenz die Strömungsgeschwindigkeit und damit der Durchfluss des Fluids durch die Leitung 100 ermittelt werden.

Häufig ist es auch so, dass in der Ultraschallmessvorrichtung 1 mindestens vier Ultraschallwandler 11, 22 zum jeweiligen Aussenden und Empfangen von Ultraschallsignalen vorgesehen sind, nämlich mindestens zwei der ersten Ultraschallwandler 11, welche lateral auf der ersten Seite 51 angeordnet sind, und mindestens zwei der zweiten Ultraschallwandler 22, welche lateral auf der zweiten Seite 52 angeordnet sind. Die Ultraschallwandler 11, 22 sind dann derart angeordnet und ausgerichtet, dass jeweils einer der ersten Ultraschallwandler 11 ein erstes Messsignal 12 schräg zur und mit der Strömungsrichtung A an einen der zweiten Ultraschallwandler 22 aussenden kann, und ein von diesem zweiten Ultraschallwandler 22 schräg zur und entgegen der Strömungsrichtung A ausgesendetes zweites Messsignal 21 empfangen kann. Die vier Ultraschallwandler 11, 12 sind dann beispielsweise in Form eines X angeordnet. Eine derartige Anordnung der Ultraschallwandler 11, 22 ist beispielsweise in der EP 3 489 634 A1 offenbart. Bei dieser Anordnung mit vier Ultraschallwandlern ist es vorteilhaft, dass sowohl in Strömungsrichtung A als auch entgegen der Strömungsrichtung A jeweils zwei voneinander unabhängige Messungen erfolgen, wodurch sich die Genauigkeit und die Zuverlässigkeit der Bestimmung des Durchflusses deutlich erhöhen. Auch die erfindungsgemässe Ultraschall-Messvorrichtung kann 1 in sinngemäss gleicher Weise mit der in der EP 3 489 634 A1 offenbarten Anordnung der Ultraschallwandler ausgestaltet sein.

In der EP 3 816 590 A1 wird eine Ultraschall-Messvorrichtung offenbart, die auch mindestens vier Ultraschallwandler umfasst, wobei ferner Ausführungsformen mit sechs Ultraschallwandlern gezeigt werden. Das Besondere der in EP 3 816 590 A1 offenbarten Ultraschall-Messvorrichtung ist es, dass hier in mindestens zwei unterschiedlichen Messebenen gemessen wird, deren Schnittlinie die Mittelachse der Messröhre ist. Auch eine solche Ausgestaltung ist für die erfindungsgemässe Ultraschall-Messvorrichtung 1 möglich.

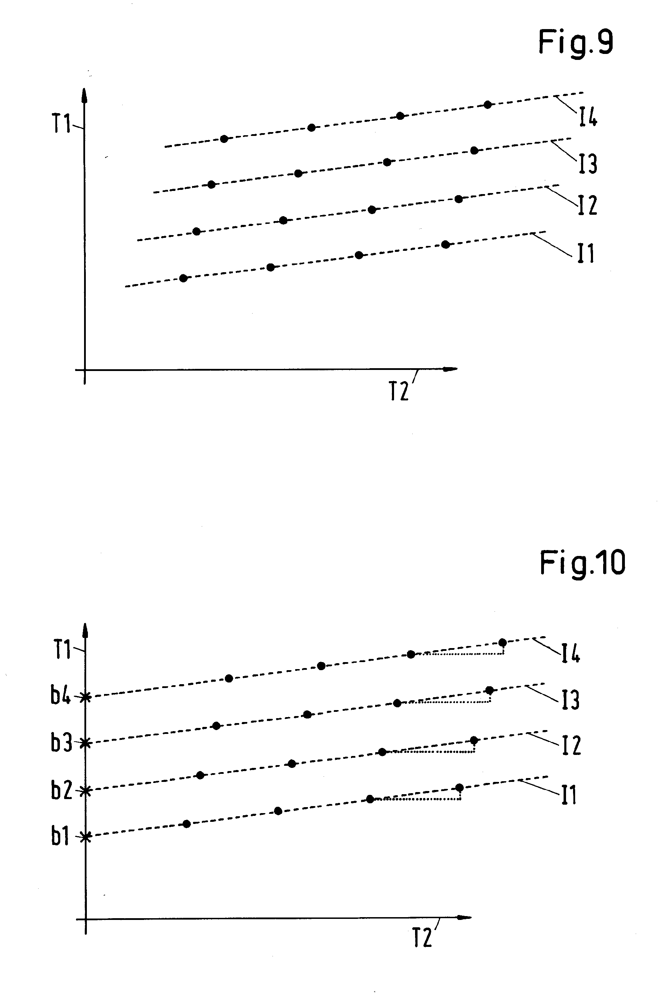

Die Ultraschall-Messvorrichtung 1 umfasst ferner mindestens zwei Temperatursensoren, nämlich einen ersten Temperatursensor 61 zum Bestimmen einer ersten Temperatur T1 (Fig. 9), der unkontaktierbar für das Fluid angeordnet ist, beispielsweise neben der Messröhre 2. und von der Mittelachse M der Messröhre 2 einen senkrechten ersten Abstand D1 hat, sowie einen zweiten Temperatursensor 62 zum Bestimmen einer zweiten Temperatur T2 (Fig. 9), der unkontaktierbar für das Fluid angeordnet ist, beispielsweise neben der Messröhre 2,und von der Mittelachse M der Messröhre 2 einen senkrechten zweiten Abstand D2 hat.

Bei der hier beschriebenen Ausführungsform ist der zweite Abstand D2 grösser als der erste Abstand D1 was noch genauer erläutert wird. Es sind aber auch solche Ausführungen möglich, bei denen der erste Abstand D1 gleich gross oder im Wesentlichen gleich gross ist wie der zweite Abstand. Die beiden Temperatursensoren 61, 62 sind jeweils mit der Kontrolleinrichtung 20 signalverbunden, sodass die von den beiden Temperatursensoren 61, 62 ermittelten Temperaturmesswerte in der Kontrolleinrichtung 20 ausgewertet werden können.

Als Temperatursensoren 61, 62 sind grundsätzlich alle Typen von Temperatursensoren geeignet, beispielsweise Thermoelemente, Thermometer, Infrarot (IR)-Sensoren oder andere Strahlungssensoren. Im Falle von berührungslosen Typen von Temperatursensoren 61, 62, z.B. IR-Sensoren, ist die Stelle, an welcher die erste bzw. die zweite Temperatur bestimmt wird, nicht die gleiche Stelle an welcher der Temperatursensor 61, 62 platziert ist, sondern die Messstelle, an welcher der jeweilige Temperatursensor 61, 62 die Temperatur bestimmt.

Ein wesentlicher Aspekt der Erfindung ist es, dass die Temperatur des Fluids in der Messröhre 2 nichtinvasiv bestimmt werden kann. Das bedeutet, dass die beiden Temperatursensoren 61, 62 derart angeordnet sind, dass sie nicht mit dem durch die Messröhre 2 strömenden Fluid in direkten körperlichen Kontakt kommen. Beispielsweise können die beiden Temperatursensoren 61, 62 "neben" der Messröhre 2 angeordnet sein. Die Temperatursensoren 61, 62 können zwar beispielsweise an der Messröhre 2 anliegen, aber sie können von dem in der Messröhre 2 strömenden Fluid nicht berührt werden.

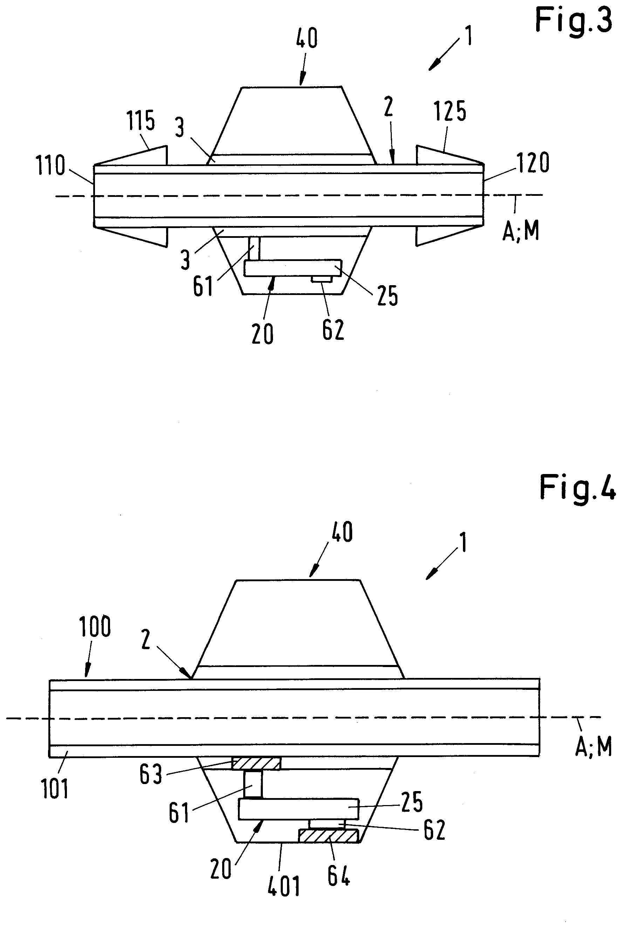

Mit der Bezeichnung "neben der Messröhre" ist gemeint, dass die Temperatursensoren 61, 62 beispielsweise oberhalb der Messröhre 2 oder unterhalb oder recht oder links der Messröhre 2 angeordnet sind. Bei Ausgestaltungen, bei welchen die Leitung 100 in die Messröhre 2 eingelegt und von dieser umschlossen wird (siehe z.B. auch Fig. 4) können die Temperatursensoren 61, 62 auch in der Messröhre 2 angeordnet sein, beispielsweise so, dass sie an der Wandung 101 der Leitung 100 anliegen. Da die Wandung 100 die Temperatursensoren 61, 62 von dem Fluid in der Leitung 100 trennt, sind die Temperatursensoren 61, 62 auch dann für das Fluid unkontaktierbar, wenn sie in der Messröhre 2 angeordnet sind.

Während des Betriebs der Ultraschall-Messvorrichtung 1 wird mittels der Temperatursensoren 61, 62 jeweils die erste Temperatur T1 und die zweite Temperatur T2 bestimmt. Aus der ersten Temperatur T1 und der zweiten Temperatur T2 wird dann in der Kontrolleinheit 20 die Temperatur TM des Fluids in der Messröhre 2 bestimmt, wie weiter hinten noch ausführlich erläutert wird.

Vorzugsweise ist der erste Abstand D1 verschieden von dem zweiten Abstand D2. Es sind aber auch Ausgestaltungen möglich, bei denen der erste Abstand D1 gleich gross oder im Wesentlichen gleich gross ist wie der zweite Abstand D2. Der erste Abstand D1 ist hier deutlich kleiner als der zweite Abstand D2. Die mit dem ersten Temperatursensor 61 gemessene erste Temperatur T1 wird somit deutlich näher an dem Fluid gemessen als die mit dem zweiten Temperatursensor 62 gemessenen zweite Temperatur T2. Daher ist die fluidnahe gemessene erste Temperatur T1 wesentlich stärker von der Temperatur des Fluids in der Messröhre 2 abhängig bzw. repräsentativer für die Temperatur des Fluids als die zweite Temperatur T2, die fluidferner gemessen wird. Anhand der zweiten Temperatur T2 wird der Umgebungseinfluss ermittelt, also der Einfluss anderer Wärmequellen oder anderer Wärmesenken, die dem Gesamtsystem aus Ultraschall-Messvorrichtung 1, Leitung 100 und Fluid Wärme zuführen oder entziehen. Solche Wärmequellen oder -senken können beispielsweise die Kontrolleinrichtung 20 sein, die elektrische oder elektronische Komponenten umfasst, welche Wärme erzeugen, oder die Umgebung der Ultraschall-Messvorrichtung 1, die der Ultraschall-Messvorrichtung 1 Wärme zuführt, falls die Umgebungstemperatur höher ist als die Temperatur der Ultraschall-Messvorrichtung 1, oder Wärme entzieht, falls die Umgebungstemperatur niedriger ist als die Temperatur der Ultraschall-Messvorrichtung.

Bevor detaillierter erläutert wird, wie das Verfahren zur Bestimmung der Temperatur des Fluids in der Messröhre 2 anhand der ersten und der zweiten Temperatur T1, T2 durchgeführt werden kann, werden zunächst noch weitere apparative Ausgestaltungsmöglichkeiten für die Ultraschall-Messvorrichtung 1 erläutert.

Fig. 2 zeigt eine perspektivische Darstellung eines zweiten Ausführungsbeispiels einer erfindungsgemässen Ultraschall-Messvorrichtung 1.

Im Folgenden wird nur auf die Unterschiede zu dem ersten Ausführungsbeispiel eingegangen. Gleiche Teile oder von der Funktion her gleichwertige Teile des zweiten Ausführungsbeispiels sind mit den gleichen Bezugszeichen bezeichnet wie bei dem ersten Ausführungsbeispiel. Insbesondere haben die Bezugszeichen die gleiche Bedeutung wie sie bereits im Zusammenhang mit dem ersten Ausführungsbeispiel erläutert sind. Es versteht sich, dass alle vorangehenden Erläuterungen des ersten Ausführungsbeispiels in gleicher Weise oder in sinngemäss gleicher Weise auch für das zweite Ausführungsbeispiel gelten.

Das zweite Ausführungsbeispiel der Ultraschall-Messvorrichtung 1 ist als Klemmvorrichtung ausgestaltet, sodass die Leitung 100 in der Ultraschall-Messvorrichtung 1 eingeklemmt werden kann.

Die Ultraschall-Messvorrichtung 1 umfasst ein Gehäuse 40. Die Ultraschall-Messvorrichtung 1 ist als Klemmvorrichtung für eine Klemmverbindung mit der Leitung 100 ausgestaltet, d.h. das Gehäuse 40 der Ultraschall-Messvorrichtung 1 kann auf die Leitung 100 geklemmt werden, derart, dass die Leitung 100 bezüglich des Gehäuses 40 fixiert ist. Die prinzipielle Ausgestaltung der Ultraschall-Messvorrichtung 1 mit dem Gehäuses 40 ist an sich bekannt, beispielsweise aus der EP 3 489 634 A1. Auch in der EP 3 816 590 A1 wird eine Ultraschall-Messvorrichtung 1 offenbart, die als Klemmvorrichtung zur lösbaren Befestigung an der Leitung 100 ausgestaltet ist.

Das Gehäuse 40 ist als schliessbares Gehäuse 40 ausgestaltet und umfasst ein erstes Gehäuseteil 41 sowie ein zweites Gehäuseteil 42, welche über ein Gelenk 43 gelenkig miteinander verbunden sind. Fig. 2 zeigt das Gehäuse 40 im geöffneten Zustand. Das Gehäuse 40 weist ferner eine durchgängige zentrale Ausnehmung auf, welche sich in Strömungsrichtung A durch das gesamte Gehäuse 40 erstreckt und im geschlossenen Zustand des Gehäuses 40 die Messröhre 2 zur Aufnahme der Leitung 100 bildet. Die Längserstreckung der zentralen Ausnehmung legt die Strömungsrichtung A fest, in welcher das Fluid die Leitung 100 bzw. das Gehäuse 40 durchströmt.

Das Gehäuse 40 weist ferner einen Verschlussmechanismus 44 auf, um das Gehäuse 40 zu verschliessen und damit die Leitung 100 in der Messröhre 2 einzuklemmen. Der Verschlussmechanismus 44 ist hier am ersten Gehäuseteil 41 angeordnet und umfasst einen Bügel 46 sowie eine klappbare Lasche 45 zum Spannen des Bügels 46. Die Leitung 100 wird in die Messröhre 2 eingelegt, anschliessend werden die beiden Gehäuseteile 41, 42 zusammengeklappt, d.h. das erste Gehäuseteil 41 wird über die Leitung 100 geklappt. Der Bügel 46 wird in Eingriff mir einem Vorsprung 47 am zweiten Gehäuseteil 42 gebracht, und durch Betätigen der Lasche 45 werden die beiden Gehäuseteile 41, 42 miteinander verspannt. Das Gehäuse 40 ist dann in seinem geschlossenen Zustand, in welchem die Leitung 100 in der Messröhre 2 eingeklemmt und somit bezüglich des Gehäuses 40 fixiert ist.

Im geschlossenen Zustand des Gehäuses 1 ist die Leitung 100 somit zwischen der ersten Seite 51 und der zweiten Seite 52 fixiert, welche sich bezüglich der Messröhre 2 gegenüberliegen.

Am Gehäuse 40 kann ferner ein Markierungselement (nicht dargestellt) vorgesehen sein, beispielsweise ein Pfeil, welches die Strömungsrichtung festlegt, in welcher das Fluid die Ultraschall-Messvorrichtung 1 durchströmen soll.

Die Messröhre 2 ist vorzugsweise so ausgestaltet, dass sie im geschlossenen Zustand des Gehäuses 40 senkrecht zur Strömungsrichtung A einen im Wesentlichen rechteckigen, insbesondere einen quadratischen Querschnitt aufweist. Dies hat den Vorteil, dass Ultraschallmesssignale, mit welchen die Leitung 100 beaufschlagt wird, auf planare, d.h. nicht gekrümmte, Oberflächen treffen, wodurch sich die Detektion und die Auswertung der Messsignale 12, 21 stark vereinfacht und die Genauigkeit der Messung erhöht wird.

Es sind auch Ausführungsformen bekannt, bei denen die Messröhre 2 derart ausgestaltet ist, dass sie im geschlossenen Zustand des Gehäuses senkrecht zur Strömungsrichtung A einen anderen polygonalen Querschnitt, beispielsweise einen hexagonalen Querschnitt aufweist. Ferner sind Ausführungsformen bekannt, bei denen dieser Querschnitt kreisförmig oder oval ist. Bei solchen Ausführungsformen werden dann häufig akustische Linsen vor den Ultraschallwandler 11, 22 zum Aussenden und/oder zum Empfangen der Messsignale 12, 21 verwendet.

Die Ultraschallwandler 11, 22, sowie die beiden Temperatursensoren 61, 62 sind im Inneren des Gehäuses 40 angeordnet und daher in Fig. 2 nicht sichtbar. Der oder die erste(n) Ultraschallwandler 11 ist/sind auf der ersten Seite 51 angeordnet, und der oder die zweiten Ultraschallwandler 22 ist/sind auf der zweiten Seite 52 angeordnet.

Bei dem zweiten Ausbildungsbeispiel der Ultraschall-Messvorrichtung 1 sind Ausgestaltungen mit genau zwei Ultraschallwandlern 11, 22 möglich (analog der Darstellung in Fig. 1), Ausgestaltungen mit genau vier Ultraschallwandlern 11, 22 oder Ausgestaltungen mit sechs oder mehr Ultraschallwandlern 11, 22. Vorzugsweise sind mindestens vier Ultraschallwandler 11, 22 vorgesehen.

Jeder der Ultraschallwandler 11, 22 ist über jeweils eine der Signalleitungen 11a, 22a (analog zu Fig. 1) mit der Kontrolleinheit 20 signalverbunden. Die Signalleitungen 11a, 22a sowie die Kontrolleinheit 20 sind im Gehäuse 40 angeordnet und daher in Fig. 2 nicht zu sehen. Über die jeweilige Signalleitung 11a, 22a werden die Ultraschallwandler 11, 22 zum Aussenden von Ultraschallsignalen angesteuert, und übermitteln die jeweils empfangenen Messsignale 12, 21 an die Kontrolleinheit 20. In der Speicher- und Auswerteeinheit 20 werden die empfangenen Messsignale 12 und 21 analysiert, und es wird jeweils der Durchfluss des Fluids durch die Leitung 100 mithilfe der Messsignale 12 und 21 ermittelt.

Die Ultraschallwandler 11, 22 können in jeder an sich bekannten Art ausgestaltet sein, insbesondere als piezoelektrische Wandler. Die Frequenz der Ultraschallsignale liegt typischerweise im Megahertz-Bereich, beispielsweise im Bereich von 1 MHz bis 30 MHz.

Der erste Temperatursensor 61 und der zweite Temperatursensor 62 sind ebenfalls im Gehäuse 40 angeordnet und daher in Fig. 2 nicht zu sehen. Die Temperatursensoren 61, 62 können jedoch beispielsweise so angeordnet sein, wie dies in Fig. 3 oder Fig. 4 dargestellt ist.

Fig. 3 zeigt in einer schematischen Schnittdarstellung eine Variante des zweiten Ausführungsbeispiels der erfindungsgemässen Ultraschall Messvorrichtung 1. Bei dieser Variante ist die Messröhre 2 eine separate Komponente, die zur Verbindung mit der Leitung 100 ausgestaltet ist. Bei dieser Variante wird also nicht die Leitung 100 von der Messröhre 2 umschlossen, sondern die Messröhre 2 wird mit der Leitung 100 verbunden.

Die Messröhre 2 erstreckt sich von einem ersten Ende 110 in der Strömungsrichtung A bis zu einem zweiten Ende 120, wobei die Länge der Messröhre 2 hier so bemessen ist, dass sowohl das erste Ende 110 als auch das zweite Ende 120 aus dem Gehäuse 40 der Ultraschall-Messvorrichtung 1 herausreichen. In anderen Ausgestaltungen können das erste Ende 110 und/oder das zweite Ende 120 auch innerhalb des Gehäuses 40 angeordnet sein. Alle Ultraschallwandler 11, 22 (in Fig. 3 nicht dargestellt) der Ultraschall-Messvorrichtung 1 sind im Gehäuse 40 bezüglich der Strömungsrichtung A zwischen dem ersten Ende 110 und dem zweiten Ende 120 der Messröhre 2 angeordnet. Die Messröhre 2 weist an ihrem ersten Ende 110 einen ersten Anschluss 115 auf, welcher zur Verbindung mit der Leitung 100 ausgestaltet ist, und an ihrem zweiten Ende 120 einen zweiten Anschluss 125, welcher ebenfalls zur Verbindung mit der Leitung 100 ausgestaltet ist. Der erste und der zweite Anschluss 115, 125 können in jeder an sich bekannten Ausgestaltung ausgebildet sein, die dafür geeignet ist, die Messröhre 2 mit der Leitung 100, die insbesondere flexibel ausgestaltet sein kann, zu verbinden. Insbesondere können der erste und der zweite Anschluss 115, 125 als Stecknippelverbindung ("barbed fitting") ausgestaltet sein, sodass die Leitung 100 in einfacher Weise auf den ersten Anschluss 115 bzw. auf den zweiten Anschluss 125 aufgeschoben werden kann, derart, dass die Leitung 100 dichtend mit der Messröhre 2 verbunden ist.

Bei einer Stecknippelverbindung ist üblicherweise an jedem Anschluss 115, 125 jeweils ein konischer Bereich vorgesehen, über welchen die Leitung 100, bzw. ein Ende der Leitung 100 gezogen oder geschoben wird. Dieser konische Bereich ist üblicherweise mit einer oder mehreren Rippe(n) versehen, die in der schematischen Darstellung der Fig. 3 nicht dargestellt sind, aber natürlich in an sich bekannter Weise vorgesehen sein können.

Die Messröhre 2 wird in sinngemäss gleicher Weise wie das vorangehend anhand von Fig. 2 für die Leitung 100 erläutert ist, in die Ultraschall-Messvorrichtung 1 eingelegt, wenn das Gehäuse 40 im geöffneten Zustand ist. Nachdem die Messröhre 2 in die Ultraschall-Messvorrichtung 1 eingelegt ist, wird das Gehäuse 40 in seinem geschlossenen Zustand gebracht, in welchem die Messröhre 2 eingeklemmt und somit bezüglich des Gehäuses 40 fixiert ist. In der Ultraschall-Messvorrichtung kann eine Halterung 3 vorgesehen sein, welche im geschlossenen Zustand des Gehäuses 40 die Messröhre 2 fest umschliesst, sodass die Messröhre 2 im Gehäuse 40 fixiert ist.

Bei der Ausgestaltung mit der separaten Messröhre 2, die in die Ultraschall-Messvorrichtung 1 eingelegt und in dieser fixiert wird, kann die Messröhre 2 insbesondere als Einmalkomponente für den Einmalgebrauch ausgestaltet sein.

Die Messröhre 2 wird unter sterilen Bedingungen nach einer genau vorgegebenen Form, Vorlage, oder Muster hergestellt. Die Herstellung kann z.B. mittels Spritzgiessens oder 3D-Druck erfolgen. Ebenso sind andere Methoden zur Herstellung möglich. Ein Vorteil von dieser Herstellungsweise ist, dass jedes produzierte Einmalteil exakt dieselben Dimensionen bzw. Abmessungen aufweist. Dies hat den Vorteil, dass beim Einsetzen der Messröhre 2 in das Gehäuse 40 der Ultraschall-Messvorrichtung 1 dieselben Messvoraussetzungen gegeben sind, was dazu führt, dass eine zuverlässige und immergleich bleibende Messung z.B. der Temperatur gewährleistet wird. Ein weiterer Vorteil der Einmalteil Messröhre 2 gegenüber einer Leitung 100 ist, dass aufgrund der immer gleichen Abmessungen der Messröhre 2 als Einmalteil, die Mittelachse M der Messröhre 2 mit einer Mittelachse der Ultraschall-Messvorrichtung 1 übereinstimmt. Dadurch wird insgesamt ein symmetrischer Aufbau der Ultraschall-Messvorrichtung 1 erreicht. Das heisst, die Ultraschall-Messvorrichtung 1 weist einen symmetrischen Aufbau auf, welcher dafür sorgt, dass ein immergleiches Umschliessen der Messröhre 2 durch das Gehäuse 40 der Ultraschall-Messvorrichtung 1 gegeben ist.

Durch den symmetrischen Aufbau des Gehäuses 40 der Ultraschall-Messvorrichtung 1 wird eine vollumfängliche Umschliessung der Messröhre 2 erreicht. Dies führt dazu, dass eine möglichst grosse Kontaktfläche zwischen der Messröhre 2 und der Ultraschall-Messvorrichtung 1 erreicht wird. Durch diesen symmetrischen und konzentrischen Aufbau werden gleichmässige thermische Verhältnisse in der Ultraschall-Messvorrichtung 1 erreicht. Das heisst, thermische Prozesse (z.B. der Temperaturverlauf) sind aufgrund der vorhandenen Symmetrien im Aufbau der Ultraschall-Messvorrichtung 1 relativ einfach durch mathematische Beziehungen zu beschreiben und somit ist, z.B. der Temperaturverlauf in Abhängigkeit z.B. der Dicke der Wandung der Messröhre 2 einfach zu berechnen, ohne grosse Änderungen an zugrundeliegenden mathematischen Berechnungsmodellen vorzunehmen. Es lassen sich somit Isotherme, also Positionen an denen gleiche thermische Verhältnisse herrschen, bestimmen, was dazu führt, dass z.B. die Positionierung der Temperatursensoren leicht variiert werden kann. Dies trifft vor allem zu, wenn die Temperatursensoren auf einer Isothermen, also zwischen Positionen mit gleicher Temperatur variiert werden.

Somit ist aber umgekehrt auch zu erkennen, dass es nicht trivial ist, an welcher Position in der Ultraschall-Messvorrichtung 1 die Temperatur gemessen werden soll, sodass diese als Eingangsgrösse für ein Berechnungsmodell dienen kann.

Die einfachere Variation der Temperatursensoren in der Ultraschall-Messvorrichtung 1 erhöht unter anderem die Flexibilität der Ultraschnell-Messvorrichtung 1 in Bezug auf die Einsatzbreite, wie auch die Schnelligkeit der Messungen und auch die Anpassung der Messung an neue Begebenheiten andererseits.

Ein weiterer Vorteil des symmetrischen Aufbaus ist es, dass die thermischen Verhältnisse in der Ultraschall-Messvorrichtung 1 nicht mit zusätzlichen Temperaturgradienten versehen werden. Dadurch werden ungleichmässige thermische Verhältnisse in der Ultraschall-Messvorrichtung 1 vermieden. Dies hat nicht nur den Vorteil, dass die Messungen genauer sind sondern auch, dass der Einfluss auf die Messröhre 2 und somit auch auf das darin fliessende Fluid verringert wird. Durch auftretenden zusätzliche Temperaturgradienten könnte es ansonsten zu z.B. mechanischen Spannung und somit ggf. zur Schädigung von sensiblen Fluiden und/oder deren Bestandteile kommen.

Um diese gewünschte Symmetrie der Ultraschall-Messvorrichtung 1 umsetzen zu können kann der Querschnitt, also die Aufnahme für die Messröhre 2, der Ultraschall-Messvorrichtung 1 hexagonal ausgestaltet sein (vgl. Fig 6). Es sind aber auch andere geometrische Formen des Querschnitts, wie z.B. kreisförmig, oval oder polygonal möglich.

Der hexagonale Querschnitt der Ultraschall-Messvorrichtung 1 sorgt für eine Erhöhung der Genauigkeit und der Auflösung bei der Messung. Durch die hexagonale Ausgestaltung ist es möglich, an der Messröhre 2 bzw. dem in der Messröhre 2 fliesenden Fluid entlang mehrerer Messpfade zu messen. Dadurch wird z.B. eine höhere Gasblasentoleranz im Fluid bei der Messung mit der Ultraschall-Messvorrichtung 1 erreicht.

Das immergleiche Umschliessen der Messröhre 2 durch die Ultraschall-Messvorrichtung 1 sorgt unter anderem dafür, dass eine optimale und reproduzierbare thermische Wechselwirkung zwischen der Ultraschall-Messvorrichtung 1 und dem Fluid, welches durch die Messröhre 2 fliesst, ermöglicht wird. Bei der Verwendung der Ultraschall-Messvorrichtung 1 an einer Leitung 100, wie z.B. einem Schlauch, kann es beim Umschliessend allein schon aufgrund der unterschiedlichen Abmessungen der unterschiedlichen Leitungen 100 zu Problemen kommen. Die optimale thermische Wechselwirkung, sowie die immergleiche Positionierung und die immergleichen Materialeigenschaften der Messröhre 2 als Einmalteil haben den Effekt, dass die Temperaturmessung des Fluids deutlich genauer wird und gleichzeitig die Reaktionszeit der Messung bei Änderung z.B. der Temperatur des Fluids, erhöht wird.

Ein weiterer Vorteil der Messröhre 2 als Einmalteil gegenüber einer Leitung 100, welche in der Ultraschall-Messvorrichtung 1 eingeklemmt wird, ist, dass die Messröhre 2 als Einmalteil formstabil ausgestaltet ist. Das heisst, durch Anbringen der Ultraschall-Messvorrichtung 1 kommt es zu einer geringeren Verformung der Messröhre 2, wohingegen bei z.B. einem Schlauch als Leitung 100 eine Clamp-on-Ultraschall-Messvorrichtung 1 dafür sorgen kann, dass der Schlauch am Ort der Anbringung dieser gequetscht und verengt werden kann, sodass einerseits das Fluid einen höheren Widerstand als üblich erfährt und andererseits eine Messung von z.B. der Temperatur nicht konsistent ist bzw. es vor jeder Messung für eine genaue Bestimmung der Temperatur eine Eichung durchgeführt werden muss.

In Fig. 3 ist auch die Kontrolleinrichtung 20 dargestellt, mit welcher die Ultraschallwandler 11, 22 angesteuert werden, und mit welcher die von den Ultraschallwandlern 11,22 empfangenen Messsignale 12, 21 ausgewertet werden. Vorzugsweise umfasst die Kontrolleinrichtung 20 einen Elektronikprint 25, der auch als PCB (printed circuit board) bezeichnet wird, und auf welchem elektronische und/oder elektrische Komponenten der Kontrollvorrichtung 20 angeordnet sind.

In Fig. 3 ist insbesondere auch die Anordnung der beiden Temperatursensoren 61, 62 dargestellt. Der erste Temperatursensor 61 ist nahe an der Messröhre 2 angeordnet, sodass die von ihm gemessene erste Temperatur T1 sehr nahe an dem in der Messröhre 2 strömenden Fluid ermittelt wird. Der zweite Temperatursensor 62 ist an der Kontrolleinheit 20 angeordnet, beispielsweise auf dem Elektronikprint 25, sodass die von dem zweiten Temperatursensor 62 ermittelte zweite Temperatur T2 repräsentativ für die Temperatur der Kontrolleinheit 20 ist. Es versteht sich, dass beide Temperatursensoren 61, 62 mit der Kontrolleinheit 20 signalverbunden sind.

Fig. 4 zeigt in einer schematischen Schnittdarstellung eine weitere Variante des zweiten Ausführungsbeispiels der erfindungsgemässen Ultraschall-Messvorrichtung 1. Diese Variante ist, in sinngemäss gleicher Weise wie in Fig. 2 gezeigt, so ausgestaltet, dass die Leitung 100 in die Messröhre 2 eingelegt wird, sodass die Leitung 100 im geschlossenen Zustand des Gehäuses 40 in der Messröhre 2 eingeklemmt ist.

Der erste Temperatursensor 61 ist an der Messröhre 2 angeordnet und über eine Wärmeleitschicht 63 mit der Wandung 101 der Leitung 100 verbunden. Der zweite Temperatursensor 62 ist an der Kontrolleinrichtung 20, hier auf dem Elektronikprint 25 angeordnet und über eine Wärmeleitschicht 64 mit einer Gehäusewand 401 verbunden, welche das Gehäuse 40 begrenzt. Durch die Anordnung des zweiten Temperatursensors 62 an der Gehäusewand 401 ist die zweite Temperatur T2 repräsentativ für die Umgebungstemperatur, womit die Temperatur der Umgebung gemeint ist, in welcher das Gehäuse 40 angeordnet ist. Die Wärmeleitschicht 63 sorgt für eine besonders gute thermische Kopplung zwischen der Leitung 100 oder der Messröhre 2 einerseits und dem ersten Temperatursensor 61 andererseits. Die Wärmeleitschicht 64 sorgt für eine besonders gute thermische Kopplung zwischen dem Gehäuse 40 und dem zweiten Temperatursensor 62.

Die Wärmeleitschichten 63 und 64 können in jeder an sich bekannten Art ausgestaltet sein. Beispielsweise können die Wärmleitschichten 63, 64 mit einer thermischen Vergussmasse realisiert werden, in welche der jeweilige Temperatursensor 61, 62 eingegossen wird. Die Wärmeleitschichten 63, 64 können z.B. auch mit Thermal-Pads, mit Wärmeleitpasten oder mit gut wärmeleitfähigen Lacken realisiert werden. Natürlich ist es auch möglich, dass der erste Temperatursensor 61 direkt an der Wandung 101 der Leitung 100 anliegt. Ferner ist es möglich, dass der zweite Temperatursensor 62 direkt an der Gehäusewand 401 anliegt.

Im Allgemeinen ist es für die Anordnung der beiden Temperatursensoren 61, 62 bevorzugt, wenn die Differenz zwischen dem ersten Abstand D1 und dem zweiten Abstand D2 möglichst gross ist. Der erste Temperatursensor 61 ist vorzugsweise möglichst nahe an dem Fluid angeordnet, während der zweite Temperatursensor 62 möglichst nahe am Gehäuse 40 und/oder an der Kontrolleinheit 20 angeordnet ist oder möglichst gut thermisch an das Gehäuse 40 gekoppelt ist, sodass die zweite Temperatur T2 die Umgebungstemperatur gut repräsentiert.

Fig. 5 zeigt eine schematische Schnittdarstellung eines dritten Ausführungsbeispiels einer erfindungsgemässen Ultraschall-Messvorrichtung 1.

Im Folgenden wird nur auf die Unterschiede zu den ersten beiden Ausführungsbeispiel eingegangen. Gleiche Teile oder von der Funktion her gleichwertige Teile des dritten Ausführungsbeispiels sind mit den gleichen Bezugszeichen bezeichnet wie bei den ersten beiden Ausführungsbeispielen. Insbesondere haben die Bezugszeichen die gleiche Bedeutung wie sie bereits im Zusammenhang mit den ersten beiden Ausführungsbeispiel erläutert sind. Es versteht sich, dass alle vorangehenden Erläuterungen in gleicher Weise oder in sinngemäss gleicher Weise auch für das dritte Ausführungsbeispiel gelten.

Bei dem dritten Ausführungsbeispiel ist die Messröhre 2 als separates Bauteil ausgestaltet, das in das Gehäuse 40 der Ultraschall-Messvorrichtung 1 eingelegt werden und dort fixiert werden kann, beispielsweise durch eine Klemmverbindung. Abgesehen von den beiden Temperatursensoren 61, 62 entspricht der grundsätzliche Aufbau der Ultraschall-Messvorrichtung 1 bzw. der Messröhre 2 des dritten Ausführungsbeispiels den Vorrichtungen, die in der EP 3 770 561 A1 offenbart sind.

Bei dem dritten Ausführungsbeispiel erstreckt sich die Messröhre 2, welche die Mittelachse M aufweist, von dem ersten Ende 110 in der Strömungsrichtung A bis zu dem zweiten Ende 120, wobei die Länge der Messröhre 2 so bemessen ist, dass sowohl das erste Ende 110 als auch das zweite Ende 120 aus dem Gehäuse 40 der Ultraschall-Messvorrichtung 1 herausreichen. Alle Ultraschallwandler 11, 22 (in Fig. 3 nicht dargestellt) der Ultraschall-Messvorrichtung 1 sind im Gehäuse 40 bezüglich der Strömungsrichtung A zwischen dem ersten Ende 110 und dem zweiten Ende 120 der Messröhre 2 angeordnet. Die Messröhre 2 weist dann an ihrem ersten Ende 110 einen ersten Anschluss 115 auf, welcher zur Verbindung mit der Leitung 100 ausgestaltet ist, und an ihrem zweiten Ende 120 einen zweiten Anschluss 125, welcher ebenfalls zur Verbindung mit der Leitung 100 ausgestaltet ist. Der erste und der zweite Anschluss 115, 125 können in jeder an sich bekannten Ausgestaltung ausgebildet sein, die dafür geeignet ist, die Messröhre 2 mit der Leitung 100, die insbesondere flexibel ausgestaltet sein kann, zu verbinden. Durch den ersten Anschluss 115 tritt das Fluid in die Messröhre 2 ein, durch den zweiten Anschluss 125 verlässt das Fluid die Messröhre 2.

Es ist eine ersten Kammer 30 vorgesehen, in welcher der erste Ultraschallwandler 11 (nicht dargestellt) angeordnet ist, sowie eine zweiten Kammer 50, in welcher der zweite Ultraschallwandler 22 (nicht dargestellt) angeordnet ist. Der erste Ultraschallwandler 11 und der zweite Ultraschallwandler 22 begrenzen eine geradlinige Messstrecke 70 für das Fluid. Die erste Kammer 30 und die zweite Kammer 50 sind so ausgestaltet und angeordnet, dass sie jeweils von dem Fluid umströmbar sind. Der erste Ultraschallwandler 11 und der zweite Ultraschallwandler 22 sind so angeordnet, dass sich die Messstrecke 70 in der Strömungsrichtung A erstreckt.

Bei dem dritten Ausführungsbeispiel sind die Ultraschallsensoren 11, 22 also derart ausgestaltet, dass sich dir Messsignale 12, 21 parallel zur Strömungsrichtung A ausbreiten.

Die Hauptausbreitungsrichtung der Messsignale 12, 21 schliesst also mit der Strömungsrichtung A einen Winkel von 0° bzw. von 180° ein. Die Messsignale 12, 21 werden folglich so ausgesendet, dass ihre Hauptausbreitungsrichtung gleich der Strömungsrichtung A ist bzw. genau entgegengesetzt dazu.

Bei dem dritten Ausführungsbeispiel der erfindungsgemässen Ultraschallmessvorrichtung 1 ist die erste Kammer 30 auf ihrer dem ersten Anschluss 115 zugewandten Seite so ausgestaltet, dass sie den Fluidstrom in Strömungsrichtung A gesehen möglichst sanft in zwei Teilströme aufteilt, von denen einer darstellungsgemäss oberhalb der ersten Kammer 30 herum geführt wird, und der andere darstellungsgemäss unterhalb der ersten Kammer 30 herum geführt wird. Dazu hat die erste Kammer 30 in Strömungsrichtung A gesehen beispielsweise einen dreieckigen Querschnitt. Durch diese Ausgestaltung wird das Fluid in zwei im Wesentlichen gleich starke Teilströme aufgeteilt.

Vorzugsweise ist die zweite Kammer 50 auf ihrer dem zweiten Anschluss 125 zugewandten Seite so ausgestaltet ist, dass sie die beiden Teilströme in Strömungsrichtung A gesehen hinter der zweiten Kammer 50 möglichst sanft wieder zusammenführt. Dazu hat die zweite Kammer 50 in Strömungsrichtung A gesehen beispielsweise einen dreieckigen Querschnitt.

Für weitere Details dieser Ausführungsform der Ultraschall-Messvorrichtung wird auf die EP 3 770 561 A1 verwiesen.

Die beiden Temperatursensoren 61, 62 und die Kontrolleinrichtung 20 sind in dem Gehäuse 40 angeordnet, wobei der erste Temperatursensor 61 nahe an dem Fluid angeordnet ist und der zweite Temperatursensor 62 nahe am Gehäuse 40.

Es sind natürlich auch solche Ausführungsformen möglich und bevorzugt, bei denen die Messröhre 2 bezüglich der Darstellung in Fig. 5 um 90° um ihre Mittelachse M gedreht angeordnet ist.

Wie bereits erläutert, ist der erste Temperatursensor 61 vorzugsweise fluidnahe angeordnet, sodass die erste Temperatur T1 vorrangig aber nicht nur von der Temperatur des Fluids in der Messröhre 2 abhängt. Der zweite Temperatursensor 62 ist deutlich weiter entfernt von dem Fluid angeordnet, vorzugsweise an der Kontrolleinheit 20, z. B. auf dem Elektronikprint 25, und/oder an der Gehäusewand 401 des Gehäuses 40. Somit ist die zweite Temperatur T2 stark abhängig von Umgebungseinflüssen, hier von der Temperatur am Elektronikprint 25 und/oder der Temperatur des Gehäuses 40, genauer gesagt der Gehäusewand 401, die wiederum stark von der Umgebungstemperatur abhängt, also von der Temperatur der Umgebung U, in welcher die Ultraschall-Messvorrichtung 1 platziert ist.

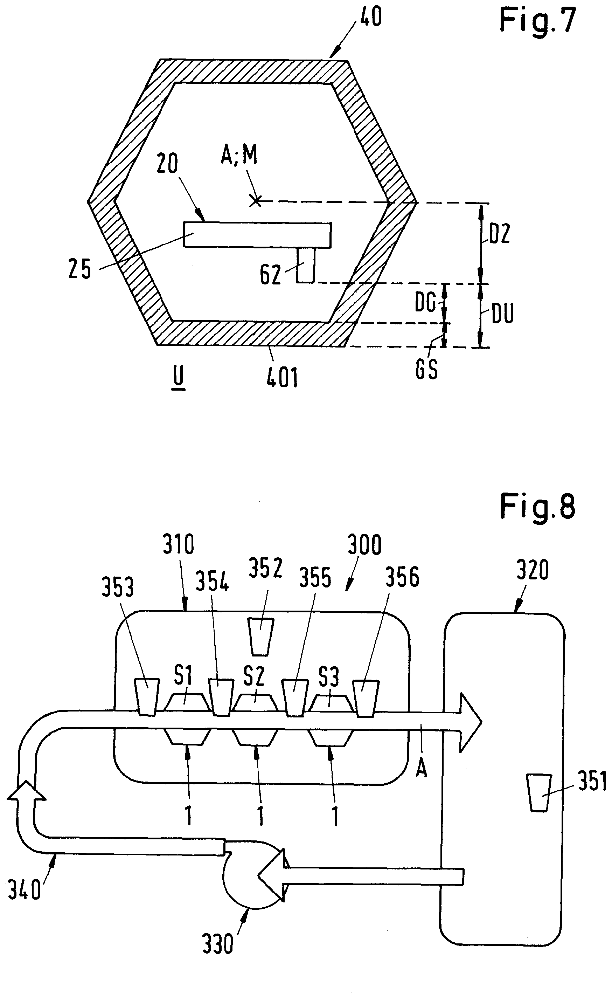

Im Folgenden werden anhand der Fig. 6 und Fig. 7 bevorzugte Bereiche für den ersten Abstand D1 (Fig. 6) und den zweiten Abstand D2 (Fig. 7) erläutert.

Im Betriebszustand der Ultraschall-Messvorrichtung 1 wird das in der Messröhre 2 strömende Fluid senkrecht zur Strömungsrichtung A durch eine Wandung W begrenzt. Je nach Ausführungsform ist diese Wandung W die Wandung 101 der Leitung 100, oder eine Wandung, welche die Messröhre 2 begrenzt. Bei Ausführungsformen, bei denen die Leitung 100 in die Messröhre 2 eingelegt wird (siehe z.B. Fig. 2, Fig. 4) ist die das Fluid begrenzende Wandung W die Wandung 101 der Leitung 100. Bei Ausführungsformen, bei denen die Leitung 100 an die Enden 110, 120 der Messröhre 2 angeschlossen wird (siehe z. B. Fig. 3, Fig. 5) ist die das Fluid begrenzende Wandung W eine Wandung der Messröhre 2. Die folgenden Ausführungen gelten für beide Ausgestaltungen. Mit dem Bezugszeichen W wird also die das Fluid begrenzende Wandung bezeichnet, welche die Wandung 101 der Leitung 100 ist, oder die Wandung der Messröhre 2.

In Fig. 6 sind drei Varianten für die Ausgestaltung der Wandung W gezeigt, welche das in der Messröhre 2 strömende Fluid senkrecht zur Strömungsrichtung A begrenzt. Die jeweils dargestellte Querschnittsfläche senkrecht zur Strömungsrichtung A kann vorgegeben sein, beispielsweise durch das Profil der Leitung 100 oder der Messröhre 2, oder sie kann durch die Ultraschall-Messvorrichtung 1 erzwungen sein, beispielsweise, wenn die Leitung in der Ultraschall-Messvorrichtung 1 eingeklemmt und dadurch ihre Querschnittsfläche deformiert wird.

Bei der darstellungsgemäss linken Variante in Fig. 6 ist die Wandung W mit ringförmigem Profil, insbesondere kreisringförmigem Profil ausgestaltet. Bei der darstellungsgemäss mittleren Variante ist die Wandung W mit sechseckigem Profil ausgestaltet. Bei der darstellungsgemäss rechten Variante ist die Wandung W mit rechteckigem Profil, insbesondere quadratischem Profil ausgestaltet, wobei die Ecken des Rechtecks bzw. des Quadrats vorzugsweise abgerundet ausgestaltet sind. Es versteht sich, dass die in Fig. 6 dargestellten Profile bevorzugte Profile sind, die aber beispielhaften Charakter haben. Es sind durchaus andere Profile möglich, beispielsweise n-eckige Profile, wobei n eine andere natürliche Zahl als vier oder sechs ist.

Die Wandung W weist eine Wandstärke WS auf, womit die Erstreckung der Wandung W in der zur Strömungsrichtung A senkrechten Richtung gemeint ist. Der erste Temperatursensor 61, welcher den ersten Abstand D1 von der Mittelachse M hat, hat von dem Fluid einen senkrechten Abstand DF und von der Wandung Weinen senkrechten Abstand DW. Der Abstand DF des ersten Temperatursensors 61 von dem Fluid ist also die Summe DW+WS, also die Summe aus dem Abstand des ersten Temperatursensors 61 von der Wandung W und der Wandstärke WS.

Bevorzugt ist es, dass der erste Temperatursensor 61 so angeordnet ist, dass sein senkrechter Abstand DF von dem Fluid in der Messröhre 2 grösser oder gleich der Wandstärke WS und kleiner oder gleich dem Zwanzigfachen, bevorzugt dem Zehnfachen der Wandstärke WS ist.

Besonders bevorzugt ist der erste Temperatursensor 61 an der Wandung W angeordnet, sodass sein Abstand DW von der Wandung W gleich null ist. In diesem Fall ist der Abstand DF des ersten Temperatursensors 61 von dem Fluid gleich der Wandstärke WS.

Ist es nicht möglich oder nicht erwünscht, beispielsweise bauartbedingt, den ersten Temperatursensor 61 direkt an der Wandung W anzuordnen, sodass der Abstand DW grösser als null ist, so ist es bevorzugt, wie bereits im Zusammenhang mit Fig. 4 erläutert, den ersten Temperatursensor 61 über die Wärmeleitschicht 63 mit der Wandung W zu verbinden. Für die Wärmeleitschicht 63 sind insbesondere Materialien mit einer guten thermischen Leitfähigkeit vorteilhaft, beispielsweise metallische Werkstoffe, wie z.B. Aluminium oder Kupfer, Thermal-Pads oder eine Wärmeleitpaste.

Anhand von Fig. 7 werden nun bevorzugte Anordnungen des zweiten Temperatursensors 62 beschrieben. Fig. 7 zeigt eine schematische Schnittdarstellung einer Ausgestaltung des Gehäuses 40 der Ultraschallmessvorrichtung 1 mit der Gehäusewand 401, welche das Gehäuse 40 gegenüber einer Umgebung U begrenzt. Weil es für das Verständnis ausreichend ist, sind in Fig. 7 ausser dem Gehäuse 40 nur die Kontrolleinrichtung 20 mit dem Elektronikprint 25 sowie der zweite Temperatursensor 62 zum Bestimmen der zweiten Temperatur T2 dargestellt.

Die Gehäusewand 401 hat zumindest in dem Bereich, der benachbart zu dem zweiten Temperatursensor 62 angeordnet ist, eine Gehäusewandstärke GS, womit die Erstreckung der Gehäusewand 401 zwischen dem Innenraum des Gehäuses 40 und der Umgebung U gemeint ist. Der zweite Temperatursensor 62 ist beispielsweise auf dem Elektronikprint 25 der Kontrolleinrichtung 20 angeordnet. Der zweite Temperatursensor 62 ist in einer senkrechten Entfernung DU von der Umgebung U angeordnet. Von der Gehäusewand 401, genauer gesagt von der Innenseite der Gehäusewand 401, hat der zweite Temperatursensor 62 einen senkrechten Abstand DG. Die senkrechte Entfernung DU des zweiten Temperatursensors 62 von der Umgebung U, also dem Raum ausserhalb des Gehäuses 40, ist somit die Summe DG+GS, also die Summe aus dem Abstand DG des zweiten Temperatursensors 62 von der Innenseite der Gehäusewand 401 und der Gehäusewandstärke GS.

Bevorzugt ist es, dass der zweite Temperatursensor 62 so angeordnet ist, dass seine senkrechte Entfernung DU von der Umgebung U grösser oder gleich der Gehäusewandstärke GS und kleiner oder gleich dem Zwanzigfachen, bevorzugt dem Zehnfachen der Gehäusewandstärke GS ist.

Besonders bevorzugt ist der zweite Temperatursensor 62 an der Gehäusewand 401, genauer gesagt an der Innenseite der Gehäusewand 401 angeordnet, sodass sein Abstand DG von der Innenseite der Gehäusewand 401 gleich null ist. In diesem Fall ist die Entfernung DU des zweiten Temperatursensors 62 von der Umgebung U gleich der Gehäusewandstärke GS.

Ist es nicht möglich oder nicht gewünscht, beispielsweise bauartbedingt, den zweiten Temperatursensor 62 direkt an der Innenseite der Gehäusewand 401 anzuordnen, sodass der Abstand DG grösser als null ist, so ist es bevorzugt, wie bereits im Zusammenhang mit Fig. 4 erläutert, den zweiten Temperatursensor 62 über die Wärmeleitschicht 64 mit der Gehäusewand 401 zu verbinden. Für die Wärmeleitschicht 64 sind insbesondere Materialien mit einer guten thermischen Leitfähigkeit vorteilhaft, beispielsweise metallische Werkstoffe, wie z.B. Aluminium oder Kupfer, Thermal-Pads oder eine Wärmeleitpaste.

Eine weitere Möglichkeit, den zweiten Temperatursensor 62 möglichst nahe an der Umgebung U anzuordnen, besteht darin, die Gehäusewandstärke GS der Gehäusewand 401 an derjenigen Stelle, wo der zweite Temperatursensor 62 angeordnet ist, zu verkleinern. Beispielsweise kann in der Gehäusewand 401 eine Sacklochbohrung vorgesehen sein, in welche der zweite Temperatursensor 62 eingesetzt wird. Es ist auch möglich, die Gehäusewandstärke GS der Gehäusewand 401 an derjenigen Stelle, wo der zweite Temperatursensor 62 angeordnet ist, auf null zu reduzieren, sodass der zweite Temperatursensor 62 direkten körperlichen Kontakt mit der Umgebung U hat. Hierzu kann beispielsweise in der Gehäusewand 401 eine Bohrung vorgesehen sein, die sich vollständig durch die Gehäusewand 401 hindurch erstreckt. In diese Bohrung kann dann der zweite Temperatursensor 62 eingeführt werden. Die senkrechte Entfernung DU des zweiten Temperatursensors 62 von der Umgebung U ist dann gleich null. Natürlich bleibt dabei die Temperaturmessung des Fluids nicht-invasiv, weil der zweite Temperatursensor 62 durch diese optionale Massnahme nicht in direkten körperlichen Kontakt mit dem Fluid in der Messröhre 2 kommt.

Durch die Erfindung wird ferner ein Verfahren zur Bestimmung der Temperatur eines Fluids in einer erfindungsgemässen Ultraschall-Messvorrichtung 1 vorgeschlagen. Bei diesem Verfahren wird mit dem ersten Temperatursensor 61 die erste Temperatur T1 bestimmt und mit dem zweiten Temperatursensor 62 die zweite Temperatur T2. In der Kontrolleinrichtung 20 ist ein Zusammenhang gespeichert, welcher Eingangsgrössen und eine Ausgangsgrösse hat. Die Eingangsgrössen des Zusammenhangs umfassen die erste Temperatur T1 und die zweite Temperatur T2. Die Ausgangsgrösse des Zusammenhangs ist die Temperatur des Fluids in der Messröhre 2, die mit TM bezeichnet wird.

Im Folgenden wird ein Ausführungsbeispiel des erfindungsgemässen Verfahrens erläutert, wobei insbesondere auf die Bestimmung des Zusammenhangs eingegangen wird, welcher in der Kontrolleinheit 20 der Ultraschall-Messvorrichtung 1 gespeichert ist.

Fig. 8 zeigt in einer schematischen Darstellung ein Ausführungsbeispiel einer Messanordnung 300, welche für die Ermittlung des Zusammenhangs zwischen der ersten Temperatur T1, der zweiten Temperatur T2 und der Temperatur TM des Fluids in der Messröhre 2 bzw. Leitung 100 geeignet ist.

Die Messanordnung 300 umfasst eine Klimakammer 310, eine Temperiervorrichtung 320, eine Pumpe 330, eine Zirkulationsleitung 340, sowie mehrere Temperatursensoren 351, 352, 353, 354, 355, 356 zum Bestimmen der Temperatur an verschiedenen Stellen der Messanordnung 300.

In der Klimakammer 310 kann eine vorgebbare, konstante Temperatur TU eingestellt werden, welche mittels des Temperatursensors 352 überwacht wird. Die Temperatur TU in der Klimakammer simuliert die Umgebungstemperatur.

In der Temperiervorrichtung 320 wird das Fluid auf eine vorgebbare Temperatur TM des Fluids temperiert. Die vorgebbare Temperatur TM, auf welche das Fluid in der Temperiervorrichtung 320 temperiert wird, ist mittels des Temperatursensors 351 überwachbar.

In der Klimakammer 310 ist eine Mehrzahl von erfindungsgemäss ausgestalteten Ultraschall-Messvorrichtungen 1, hier drei Ultraschall-Messvorrichtungen 1, in Serie hintereinander angeordnet. Die drei Ultraschall-Messvorrichtungen 1 sind alle gleich ausgestaltet. Grundsätzlich ist auch eine einzige Ultraschall-Messvorrichtung 1 in der Klimakammer 310 ausreichend, jedoch lässt sich mit mehreren gleichen Ultraschall-Messvorrichtungen 1 die Genauigkeit des zu bestimmenden Zusammenhangs verbessern, weil beispielsweise Bauteiltoleranzen der Ultraschall-Messvorrichtung 1 herausgemittelt werden. Alle Ultraschall-Messvorrichtungen 1 sind in der Klimakammer 310 in Serie, also hintereinander angeordnet. In jeder der Ultraschall-Messvorrichtungen 1 sind jeweils der erste Temperatursensor 61 zur Erfassung der ersten Temperatur T1 und der zweite Temperatursensor 62 zur Erfassung der Temperatur T2 angeordnet. Die Temperatursensoren 61, 62 sind in Fig. 8 nicht dargestellt.

Ferner sind in der Klimakammer 310 an der Zirkulationsleitung 340 mehrere Temperatursensoren 353, 354, 355, 356 angeordnet, um die Temperatur des Fluids in der Zirkulationsleitung 340 zu Überwachen. Vorzugsweise ist in Strömungsrichtung A gesehen in der Klimakammer 310 stromaufwärts jeder Ultraschall-Messvorrichtung 1 jeweils ein Temperatursensor 353, 354, 355 angeordnet und stromabwärts der letzten Ultraschall-Messvorrichtung 1 ein Temperatursensor 356.

Die Temperiervorrichtung 320, die Pumpe 330 und die Klimakammer 310 sind mittels der Zirkulationsleitung 340 zu einem Strömungskreislauf verbunden, durch welchen das Fluid von der Pumpe 330 zirkuliert wird.

Das Fluid wird in der Temperiervorrichtung 320 auf die vorgebbare Temperatur TM temperiert und von der Pumpe 330 durch die Zirkulationsleitung 340 und die Klimakammer 310 zurück in die Temperiervorrichtung 320 zirkuliert. In der Klimakammer 310 durchströmt das Fluid nacheinander die drei Ultraschall-Messvorrichtungen 1, wobei in jeder der Ultraschall-Messvorrichtungen 1 mittels der Temperatursensoren 61, 62 (nicht dargestellt) jeweils die erste Temperatur T1 und die zweite Temperatur T2 ermittelt wird. Falls - wie in Fig. 8 gezeigt - mehrere Ultraschall-Messvorrichtungen 1 in der Klimakammer 310 angeordnet sind, so wird für eine individuelle Messung für die erste Temperatur T1 bzw. für die zweite Temperatur T2 jeweils der Mittelwert der von den verschiedenen ersten Temperatursensoren 61 gemessenen ersten Temperaturen T1 bzw. der von den verschiedenen zweiten Temperatursensoren 62 gemessenen zweiten Temperaturen T2 verwendet.

Für eine individuelle Messung wird mittels des Temperiergeräts die Temperatur TM des Fluids eingestellt, während in der Klimakammer 310 die Temperatur TU eingestellt wird, welche die Umgebungstemperatur simuliert. Die Temperatursensoren 351-356 dienen primär der Überwachung exakter Bedingungen während der Messungen.

Da der thermische Einfluss des Fluids auf die Ultraschall-Messvorrichtungen 1 nicht vernachlässigt werden kann und soll, ist es bevorzugt, dass das Fluid mit einem Volumen bzw. mit einem Volumenstrom des Fluids zirkuliert wird, bei dem die Wechselwirkung zwischen dem Fluid und den Ultraschall-Messvorrichtungen 1 in einem merkbaren Umfang gewährleistet ist. In der Praxis hat es sich gezeigt, dass ein minimaler Volumenstrom des Fluids von 100 ml/min ausreichend ist. Die Grösse des vorteilhaften Volumenstroms hängt natürlich von der Ausgestaltung und insbesondere von der Grösse der Ultraschall-Messvorrichtung 1 ab. Je nach spezifischer Ausgestaltung bzw. Grösse der Ultraschall-Messvorrichtung 1 ist es bevorzugt, dass der Volumenstrom des Fluids im Bereich von 500 ml/min bis 5000 ml/min liegt. Es hat sich gezeigt, dass der Volumenstrom des Fluids für eine zuverlässige Bestimmung des Zusammenhangs nicht variiert werden muss. Insbesondere wenn der Volumenstrom des Fluids mindestens so gross ist wie der bevorzugte Minimalwert von 100 ml/min, resultiert ein konstanter, stabiler und größtenteils flussunabhängiger Wärmeaustausch zwischen der Ultraschall-Messvorrichtung 1 und dem Fluid.

Zur Bestimmung des Zusammenhangs zwischen der ersten Temperatur T1, der zweiten Temperatur T2 und der Temperatur TM des Fluids in der Messröhre 2 bzw. Leitung 100 werden nun verschiedene Messungen durchgeführt, die bei unterschiedlichen Temperaturen TM des Fluids und bei unterschiedlichen Temperaturen TU in der Klimakammer 310, welche unterschiedliche Umgebungstemperaturen simulieren, durchgeführt. Dabei erfolgt die Variation der Temperatur TM des Fluids mittels der Temperiervorrichtung 320 und die Variation der Temperatur TU mittels der Klimakammer 310.

Prinzipiell können die beiden Temperaturen TM und TU beliebig variiert werden. Es ist jedoch vorteilhaft, wenn die Temperaturen TM und TU den Bereich abdecken, in welchem die Ultraschall-Messvorrichtung 1 später im Betrieb arbeiten soll. Falls das Fluid beispielsweise Wasser oder eine wasserähnliche Flüssigkeit ist, so ist es bevorzugt die Temperatur TM des Fluids zwischen etwa 2°C und 90°C zu variieren. Falls das Medium der Umgebung U Luft ist, so ist es bevorzugt, die Temperatur TU im Bereich von 5°C bis 60°C zu variieren.

Nachdem nach einer individuellen Messung die Temperatur TM des Fluids oder die Temperatur TU in der Klimakammer 310 auf einen neuen Wert eingestellt worden ist, wird vor der nächsten individuellen Messung ausreichend lange gewartet, bis sich das gesamte System der Messanordnung 300 eingeschwungen hat und thermisch stabil ist.

Mit mehreren individuellen Messungen wird nun eine Mehrzahl von Isothermen I1, I2, I3, I4 ermittelt. Fig. 9 zeigt als Beispiel eine Mehrzahl von vier Isothermen I1, I2, I3 und I4. In Fig. 9 ist auf der horizontalen Achse die messtechnisch ermittelte zweite Temperatur T2 aufgetragen, die mittels der zweiten Temperatursensoren 62 der Ultraschall-Messvorrichtungen 1 ermittelt wurden. Wie bereits gesagt, ist der jeweilige Messwert von T2 der Mittelwert der drei Werte von T2, die in den verschiedenen Ultraschall-Messvorrichtungen 1 ermittelt wurden. Auf der vertikalen Achse ist die messtechnisch ermittelte erste Temperatur T1 aufgetragen, die mittels der ersten Temperatursensoren 61 der Ultraschall-Messvorrichtungen 1 ermittelt wurden. Wie bereits gesagt, ist der jeweilige Messwert von T1 der Mittelwert der drei Werte von T1, die in den verschiedenen Ultraschall-Messvorrichtungen 1 ermittelt wurden. In Fig. 9 zeigen die schwarzen Punkte auf den Isothermen I1-I4 die messtechnisch bestimmten Werte von T1 und T2 an.

Auf jeder Isotherme 11-14 ist jeweils die Temperatur TM des Fluids konstant, und die vier unterschiedlichen Punkte gehören zu unterschiedlichen Werten von TU. Das heisst, eine Isotherme I1 oder I2 oder I3 oder I4 wird bestimmt, indem die Temperatur TM des Fluids auf einem konstanten Wert gehalten wird und die Temperatur TU in der Klimakammer 310 auf verschiedene Werte - hier vier verschiedene Werte - eingestellt wird. Jede Isotherme 11-14 gibt also jeweils die Abhängigkeit der ersten Temperatur T1 von der zweiten Temperatur T2 an, wenn die Temperatur TM des Fluids konstant gehalten wird und die Temperatur TU variiert wird.

Beispielsweise gehört die Isotherme I1 zu der konstanten Temperatur TM von 10°C, die

Isotherme I2 zu der konstanten Temperatur TM von 20°C, die Isotherme I3 zu der konstanten Temperatur TM von 30°C und die Isotherme I4 zu der konstanten Temperatur TM von 40°C.

Die vier Messpunkte auf jeder der Isothermen 11-14 gehören - von links nach rechts in Fig. 9 - beispielsweise zu den Werten 10°C, 20°C, 30°C und 40°C für die Temperatur TU.

Diese Zahlenwerte sind natürlich nur beispielhaft zu verstehen und dienen der Erläuterung, wie der gewünschte Zusammenhang ermittelt wird.

Für eine konstante Temperatur TM des Fluids liegen alle Messpunkte jeweils auf einer Geraden, das heisst jede Isotherme 11-14 lässt sich als Gerade der Form

$$T1 = a \cdot T2 + bt$$

darstellen, wobei a die Steigung der Geraden ist und bt der Achsenabschnitt, wo die jeweilige Gerade die vertikale Achse schneidet.

Es hat sich gezeigt, dass für alle Temperaturen TM des Fluids die zugehörige Isotherme I1, I2, I3, I4 jeweils die gleiche Steigung a hat, das heisst, dass alle Isothermen 11-14 parallel sind. Dies ist auch in Fig. 9 zu erkennen. Die verschiedenen Isothermen I1-I4 unterscheiden sich also nur durch ihren Achsenabschnitt bt, der von der Temperatur TM abhängt, zu der die jeweilige Isotherme 11-14 gehört. Die Steigung a, die jede der Isothermen 11-14 hat, ist folglich eine Konstante, die von der jeweiligen Ultraschall-Messvorrichtung 1 abhängt. Diese Konstante muss für jede Ausführungsform der Ultraschall-Messvorrichtung 1 neu bestimmt werden, ist dann aber für bauartgleiche Ultraschall-Messvorrichtungen 1 immer gleich.

Hat man die einzelnen Isothermen 11-14 vorzugsweise so bestimmt, dass der gesamte gewünschte Arbeitsbereich der Ultraschall-Messvorrichtung 1 abgedeckt ist, so werden die Achsenabschnitte bt der Isothermen 11-14 bestimmt. Das ist in Fig. 10 dargestellt. Für jede Isotherme I1-I4 wird der zugehörige Achsenabschnitt bt bestimmt. Die verschiedenen Achsenabschnitte werden mit b1, b2, b3 und b4 bezeichnet, wobei b1 der Achsenabschnitt der Isotherme I1 ist und somit zu derjenigen Temperatur TM des Fluids gehört, bei der die Isotherme I1 bestimmt wurde. In analoger Weise gehört b2 zu der Isotherme I2, b3 zu der Isotherme I3 und b4 zu der Isotherme I4.

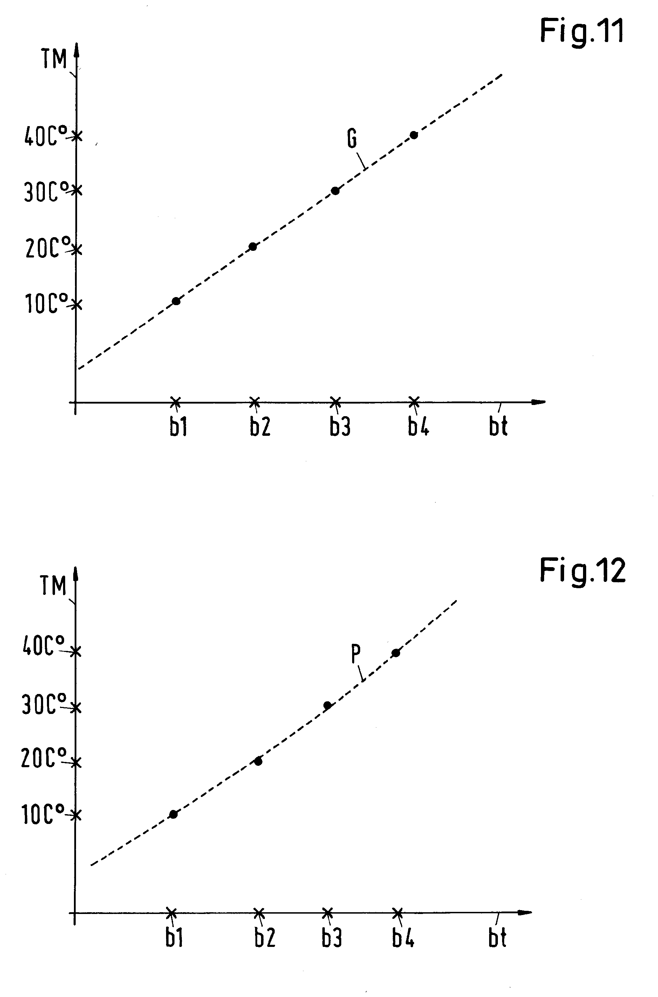

Nun wird die Beziehung zwischen der Temperatur TM des Fluids und den Achsenabschnitten bt bestimmt. In den Fig. 11 und Fig. 12 sind jeweils auf der horizontalen Achse die Achsenabschnitte bt der Isothermen 11-14 aufgetragen und auf der vertikalen Achse die Temperatur TM des Fluids, zu welcher der jeweilige Achsenabschnitt bt gehört. Dies sind die jeweils vier als schwarze Punkte dargestellten Wertepaare in Fig. 11 bzw. Fig. 12.

Aus diesen Wertepaaren TM, bt wird nun eine Bestimmungsfunktion ermittelt, welche die Temperatur TM des Fluids in Abhängigkeit von den Achsenabschnitten bt beschreibt. Diese Bestimmungsfunktion hat also genau eine Variable, nämlich den Achsenabschnitt bt der Isotherme.

In der Praxis hat es sich gezeigt, dass es für sehr viel Anwendungsfälle ausreichend ist, wenn die Bestimmungsfunktion ein Polynom höchstens zweiten Grades ist. Natürlich ist es auch möglich, für die Bestimmungsfunktion ein Polynom n-ten Grades mit n grösser zwei zu verwenden.

In Fig. 11 ist die Bestimmungsfunktion eine Geraden G, also ein Polynom ersten Grades, wobei die Gerade G durch die folgende Funktion beschrieben wird:

$$TM = E \cdot bt + F$$

In Fig. 12 ist die Bestimmungsfunktion eine quadratische Funktion P, also ein Polynom zweiten Grades, welche durch die folgende Funktion beschrieben wird:

$$TM = E \cdot bt^2 + F \cdot bt + H$$

Mit an sich bekannten Näherungsverfahren können die Koeffizienten E, F und gegebenenfalls H bestimmt werden.

Die Koeffizienten E, F und H sind wie die Steigung a Modelkonstanten, die von der jeweiligen Ultraschall-Messvorrichtung 1 abhängen. Die Koeffizienten E, F und gegebenenfalls H müssen für jede Ausführungsform der Ultraschall-Messvorrichtung 1 neu bestimmt werden, sind dann aber für bauartgleiche Ultraschall-Messvorrichtungen 1 immer gleich

Mit den Koeffizienten E, F und gegebenenfalls H sowie der Steigung a ist nun der Zusammenhang bekannt, welcher als Eingangsgrössen die erste Temperatur T1 und die zweite Temperatur T2 hat, und als Ausgangsgrösse die Temperatur TM des Fluids in der Messröhre.

Werden nun im Betriebszustand Der Ultraschall-Messvorrichtung mittels der beiden Temperatursensoren 61, 62 die erste Temperatur T1 und die zweite Temperatur T2 ermittelt, so kann zunächst über die Isothermengleichung:

$$bt = T1 - a \cdot T2$$

Der Achsenabschnitt bt berechnet werden.

Anschliessend kann die Temperatur TM des Fluids in der Messröhre 2 mittels der linearen Bestimmungsfunktion

$$TM = E \cdot bt + F$$

oder mittels der quadratischen Bestimmungsfunktion

$$TM = E \cdot bt^2 + F \cdot bt + H$$

mit hoher Genauigkeit ermittelt werden.

Somit lässt sich im Betriebszustand der Ultraschall-Messvorrichtung 1 aus den messtechnisch ermittelten Temperaturen, nämlich der ersten Temperatur T1 und der zweiten Temperatur T2, die Temperatur TM des Fluids in der Messröhre sehr genau bestimmen. Dabei ist diese zuverlässige Temperaturbestimmung nicht-invasiv, das heisst keiner der Temperatursensoren 61, 62 kommt in direkten körperlichen Kontakt mit dem Fluid, das die Messröhre 2 oder die Leitung 100 durchströmt.

Optional können die Eingangsgrössen des Zusammenhangs, nämlich die erste Temperatur T1 und die zweite Temperatur T2 einer Korrektur unterzogen werden. Da die verschiedenen Komponenten, wie beispielsweise die Temperatursensoren 61, 62, die z.B. als Thermoelemente oder Infrarotsensoren ausgestaltet sind, oder Komponenten zur Strommessung oder Spannungsmessung, die z.B. als integrierte Schaltkreise ausgestaltet sind, mit Bauteiltoleranzen behaftet sein können, kann es vorteilhaft sein, solche Bauteiltoleranzen abzugleichen.

Dieser Abgleich erfolgt bevorzugt anhand der Isothermengleichung

$$bt = T1 - a \cdot T2$$

indem man für die Temperaturen T1 und T2 Offset-Werte T1 off und T2off zulässt, die für die spezifische Ultraschall-Messvorrichtung 1 jeweils konstante Werte sind.

Die Isothermengleichung lautet dann

$$bt = (T1 - T1off) - a \cdot (T2 - T2off)$$

Auf diese Weise lassen sich insbesondere Bauteiltoleranzen in den Temperatursensoren 61, 62 abgleichen.

Es versteht sich, dass auch solche Ausführungsformen des erfindungsgemässen Verfahrens möglich sind, bei welchen der Zusammenhang, dessen Ausgangsgrösse die Temperatur TM des Fluids in der Messröhre 2 ist, ausser der ersten Temperatur T1 und der zweiten Temperatur T2 noch weitere Eingangsgrössen hat, beispielsweise zusätzliche Temperaturen, z.B. die Temperatur der Umgebung oder elektrische Betriebsgrössen oder andere Betriebsparameter.

**Patentansprüche**

1. Ultraschall-Messvorrichtung zur Ermittlung des Durchflusses eines in einer Leitung (100) strömenden Fluids, mit einer Messröhre (2), welche eine Mittelachse (M) aufweist, die eine Strömungsrichtung (A) für das Fluid festlegt, mit mindestens zwei Ultraschallwandlern (11,22), die derart angeordnet und ausgerichtet sind, dass sie Messsignale (12, 21) miteinander austauschen können, mit einer Kontrolleinheit (20) zum Ansteuern der Ultraschallwandler (11, 22) und zum Auswerten der Messsignale (12, 21), und mit einem ersten Temperatursensor (61) zum Bestimmen einer ersten Temperatur (T1), der für das Fluid unkontaktierbar angeordnet ist, **da-**

**durch gekennzeichnet, dass** ein zweiter Temperatursensor (62) zum Bestimmen einer zweiten Temperatur (T2) vorgesehen ist, der für das Fluid unkontaktierbar angeordnet ist.

2. Ultraschall-Messvorrichtung nach Anspruch 1, wobei der erste Temperatursensor (61) einen senkrechten ersten Abstand (D1) von der Mittelachse (M) hat, wobei der zweite Temperatursensor (62), einen senkrechten zweiten Abstand (D2) von der Mittelachse (M) hat, und wobei der zweite Abstand (D2) grösser ist als der erste Abstand (D1), oder gleich gross wie der erste Abstand (D1).

3. Ultraschall-Messvorrichtung nach einem der vorangehenden Ansprüche, wobei der erste Temperatursensor (61) an der Messröhre (2) angeordnet ist.

4. Ultraschall-Messvorrichtung nach einem der vorangehenden Ansprüche, wobei die Kontrolleinheit (20) einen Elektronikprint (25) umfasst, und der zweite Temperatursensor (62) an dem Elektronikprint (25) angeordnet ist.

5. Ultraschall-Messvorrichtung nach einem der vorangehenden Ansprüche, wobei im Betriebszustand das in der Messröhre (2) strömende Fluid senkrecht zur Strömungsrichtung (A) durch eine Wandung (W) begrenzt wird, welche eine Wandstärke (WS) aufweist, und wobei der erste Temperatursensor (61) einen senkrechten Abstand (DF) von dem Fluid in der Messröhre (2) hat, der grösser oder gleich der Wandstärke (WS) und kleiner oder gleich dem Zwanzigfachen, bevorzugt dem Zehnfachen der Wandstärke (WS) ist, oder wobei der erste Temperatursensor (61) über eine Wärmeleitschicht (63) mit der Wandung (W) verbunden ist.

6. Ultraschall-Messvorrichtung nach einem der vorangehenden Ansprüche, die ein Gehäuse (40) umfasst, in welchem die Messröhre (2) und die Kontrolleinheit (20) angeordnet sind, wobei der zweite Temperatursensor (62) am Gehäuse (40) oder an der Kontrolleinheit (20) angeordnet ist.

7. Ultraschall-Messvorrichtung nach Anspruch 6, wobei das Gehäuse (40) durch eine Gehäusewand (401) gegenüber einer Umgebung (U) begrenzt wird, wobei die Gehäusewand (401) eine Gehäusewandstärke (GS) aufweist, und wobei der zweite Temperatursensor (62) in einer senkrechten Entfernung (DU) von der Umgebung (U) angeordnet ist, die grösser oder gleich der Gehäusewandstärke (GS) ist, und kleiner oder gleich dem Zwanzigfachen, bevorzugt dem Zehnfachen der Gehäusewandstärke (GS), oder wobei der zweite Temperatursensor (62) über eine Wärmeleitschicht (64) mit der Gehäusewand (401) verbunden ist.

8. Ultraschall-Messvorrichtung nach einem der vorangehenden Ansprüche, wobei die Messröhre (2) zur Aufnahme der Leitung (100) ausgestaltet ist, derart dass die Leitung (100) von der Messröhre (2) umschlossen wird.

9. Ultraschall-Messvorrichtung nach Anspruch 8, welche als Klemmvorrichtung für eine Klemmverbindung mit der Leitung (100) ausgestaltet ist, sodass die Leitung (100) in der Messröhre (2) einklemmbar ist.

10. Ultraschall-Messvorrichtung nach einem der Ansprüche 1-7, bei welcher sich die Messröhre (2) von einem ersten Ende (110) in der Strömungsrichtung (A) bis zu einem zweiten Ende (120) erstreckt, wobei die Messröhre (2) an ihrem ersten Ende (110) einen ersten Anschluss (115) aufweist, welcher zur Verbindung mit der Leitung (100) ausgestaltet ist, und an ihrem zweiten Ende (120) einen zweiten Anschluss (125), welcher zur Verbindung mit der Leitung (100) ausgestaltet ist.

11. Verfahren zur Bestimmung der Temperatur eines Fluids in einer Ultraschall-Messvorrichtung, die nach einem der vorangehenden Ansprüche ausgestaltet ist, **dadurch gekennzeichnet, dass** mit dem ersten Temperatursensor (61) die erste Temperatur (T1) bestimmt wird, und mit dem zweiten Temperatursensor (62) die zweite Temperatur (T2), dass in der Kontrolleinrichtung ein Zusammenhang gespeichert ist, welcher Eingangsgrössen und eine Ausgangsgrösse hat, wobei die Eingangsgrössen die erste Temperatur (T1) und die zweite Temperatur (T2) umfassen, und wobei die Ausgangsgrösse die Temperatur (TM) des Fluids in der Messröhre (2) ist.

12. Verfahren nach Anspruch 11, wobei der Zusammenhang auf einer Mehrzahl von Isothermen (I1, I2, I3, I4) beruht, von denen jede eine lineare Gleichung mit einer Steigung (a) und einem Achsenabschnitt (bt) ist, welche für eine konstante Temperatur (TM) des Fluids in der Messröhre (2) die erste Temperatur (T1) als Funktion der zweiten Temperatur (T2) beschreibt.

13. Verfahren nach Anspruch 12, wobei die Temperatur (TM) des Fluids in der Messröhre (2) mit einer Bestimmungsfunktion ermittelt wird, die genau eine Variable hat, wobei die Variable der Achsenabschnitt (bt) der Isotherme (I1, I2, I3, I4) ist.

14. Verfahren nach Anspruch 13, wobei die Bestimmungsfunktion ein Polynom höchstens zweiten Grades ist.

15. Verfahren nach einem der Ansprüche 12-14, wobei für die Ultraschall-Messvorrichtung anhand der Isothermen (I1, I2, I3, I4) spezifische Offset-Werte (T1off, T2off) für die Eingangsgrössen ermittelt werden.

Fig.1

Fig.2

Fig.3

Fig.4

# Fig.5

# Fig.6

Fig.7

Fig.8

Fig.9

Fig.10

Fig.11

Fig.12

**EUROPÄISCHER RECHERCHENBERICHT**

Europäisches Patentamt
European Patent Office
Office européen des brevets

Nummer der Anmeldung

EP 25 15 2178

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/274474 A1 (REMONI AS [DK]) 5. Januar 2023 (2023-01-05) | 1-5,8, 10,11 | INV. G01F1/667 |
| Y | * Abbildung 2 * <br> * Absatz [0012] * <br> * Absatz [0023] - Absatz [0024] * <br> - - - - - | 12-15 | |
| X | US 2018/110913 A1 (LODERER CHRISTIAN [DE] ET AL) 26. April 2018 (2018-04-26) <br> * Abbildung 2A * <br> * Seite 19, Zeile 16 - Seite 21, Zeile 30 * <br> - - - - - | 1-3,5,8, 10 | |
| X | EP 2 840 362 B1 (KAMSTRUP AS [DK]) 24. Februar 2021 (2021-02-24) <br> * Abbildungen 1, 14 * <br> * Absatz [0064] - Absatz [0066] * <br> - - - - - | 1-3,5-10 | |
| Y | US 7 219 557 B2 (KROHNE AG [CH]) 22. Mai 2007 (2007-05-22) <br> * Spalte 2, Zeile 60 - Spalte 3, Zeile 24 * <br> - - - - - | 12-15 | **RECHERCHIERTE SACHGEBIETE (IPC)** <br><br> G01F |

Der vorliegende Recherchenbericht wurde für alle Patentansprüche erstellt

| Recherchenort | Abschlußdatum der Recherche | Prüfer |
|---|---|---|
| Den Haag | 8. Mai 2025 | Nierhaus, Thomas |

**ANHANG ZUM EUROPÄISCHEN RECHERCHENBERICHT
ÜBER DIE EUROPÄISCHE PATENTANMELDUNG NR.**

EP 25 15 2178

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2025

| Im Recherchenbericht angeführtes Patentdokument | Datum der Veröffentlichung | Mitglied(er) der Patentfamilie | Datum der Veröffentlichung |
|---|---|---|---|
| WO 2023274474 A1 | 05-01-2023 | AU 2022301224 A1 | 25-05-2023 |
| | | AU 2022303540 A1 | 04-01-2024 |
| | | AU 2022304000 A1 | 04-01-2024 |
| | | CA 3223300 A1 | 05-01-2023 |
| | | CA 3223307 A1 | 05-01-2023 |
| | | DK 202200049 A1 | 04-10-2022 |
| | | EP 4363805 A1 | 08-05-2024 |
| | | EP 4363806 A1 | 08-05-2024 |
| | | JP 2024527311 A | 24-07-2024 |
| | | JP 2024527312 A | 24-07-2024 |
| | | US 2024142283 A1 | 02-05-2024 |
| | | US 2024151568 A1 | 09-05-2024 |
| | | WO 2023274474 A1 | 05-01-2023 |
| | | WO 2023274475 A1 | 05-01-2023 |
| | | WO 2023274476 A1 | 05-01-2023 |
| US 2018110913 A1 | 26-04-2018 | CN 107530530 A | 02-01-2018 |
| | | CN 112370593 A | 19-02-2021 |
| | | EP 3261708 A1 | 03-01-2018 |
| | | JP 6827634 B2 | 10-02-2021 |
| | | JP 6919022 B2 | 11-08-2021 |
| | | JP 2018512576 A | 17-05-2018 |
| | | JP 2020144145 A | 10-09-2020 |
| | | KR 20180026364 A | 12-03-2018 |
| | | US 2018110913 A1 | 26-04-2018 |
| | | US 2020164132 A1 | 28-05-2020 |
| | | WO 2016138380 A1 | 01-09-2016 |
| EP 2840362 B1 | 24-02-2021 | DK 2840362 T3 | 25-05-2021 |
| | | EP 2840362 A1 | 25-02-2015 |
| | | LT 2840362 T | 10-06-2021 |
| | | PL 2840362 T3 | 26-07-2021 |
| US 7219557 B2 | 22-05-2007 | AT E406566 T1 | 15-09-2008 |
| | | DE 102004019189 B3 | 18-08-2005 |
| | | DK 1586870 T3 | 12-01-2009 |
| | | EP 1586870 A1 | 19-10-2005 |
| | | JP 4386284 B2 | 16-12-2009 |
| | | JP 2005308740 A | 04-11-2005 |
| | | US 2005229714 A1 | 20-10-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 3770561 A1
- EP 3489634 A1
- EP 3816590 A1
- EP 3770531 A1